# EUROPEAN PATENT APPLICATION

(11) **EP 1 925 762 A1**
(43) Date of publication of application: **28.05.2008**
(21) Application number: 06761310.9
(22) Date of filing: 22.06.2006
(51) Int. Cl.: E04H 6/08, B65G 1/00

(54) **A SPACE STORING/PARKING METHOD AND A SYSTEM THEREFOR, A SPACE STORING SYSTEM FOR CONTAINER, A CONTAINER DOCK AND A LOAD-UNLOAD METHOD AT THE CONTAINER DOCK**

(30) Priority: 24.06.2005 CN 200510200350
(71) Applicant: Zhang, Ning, Changping District, Beijing 102218 (CN)
(72) Inventor: Zhang, Ning, Changping District, Beijing 102218 (CN)
(74) Representative: de la Bigne, Guillaume Michel Marie
(86) International application number: PCT/CN2006/001419
(87) International publication number: WO 2006/136108

(57) **Abstract**

The present invention relates to a warehousing/parking method, comprising: providing at least one vertical storage block, each block including a plurality of storage layers; each layer comprising an upper and a lower storage spaces or slots, and a horizontal intermediate transport passage positioned between the upper and the lower storage spaces, the upper and the lower storage spaces are positioned above and under the transport passage respectively; providing a carrier which can travel in the transport passage, goods/vehicle(s) on a pallet are conveyed by the carrier along the transport passage, and are stored into or retrieved from the upper or lower storage spaces by means of a lifting means provided in the carrier in a lifting manner; providing at least one vertical passage for a lifter, the vertical passage extending through the storage layers, and the lifter can move up and down in the vertical passage and exchange goods/vehicle(s) with the storage spaces nearest to the vertical passage or the carriers of the storage layers. The present invention also relates to a warehousing/parking system established according to the method and its application, and a container storing system, a container terminal and a port container handling method. The warehousing/parking system according to the present invention can constitute a logistics and multimodal transportation center for sea/air, railway and land way transportation.

## Description

### CROSS-REFERENCE TO RELATED APPLICATIONS

This application claims the priority of Chinese Patent application, No.200510200350.3, filed on June 24, 2005.

### BACKGROUND-FIELD OF INVENTION

This invention relates to a warehousing/parking method, a warehousing/parking system established according to the method and its application, particularly to a large-scale automated warehousing/parking system and its application.

### BACKGROUND-DESCRIPTION OF PRIOR ART

Most of the known automated warehouses are multi-storey aisle-storing high-rack warehouses, which are consisted of racks, aisle stackers, conveyors for goods into and out of warehouse, automated control and management system and the like equipments, wherein storing and retrieving operation of goods can be automatically carried out according to instructions, and automatic management can also be carried out for the warehoused goods.

The known parking systems include conventional multi-storey aboveground or underground garages, mechanical garages such as lift-sliding type or vertical circulating type, as well as recently developed so-called intelligent storage type parking systems. The intelligent storage type garages are subjected to favour recently because of their large parking capacity and high space utilization rate, and have advatanges such as simple storage and retrival of vehicles, high strorage and retrival speed and high automation of management. The intelligent storage type garages basically include aisle-storing type and tower type garages (simplified from aisle-storing type), and rotation tower type garages (devolved from tower type).

All of the known parking systems have their different advantages and disadvantages as below:

A multi-storey aboveground and underground type garage is usually a large-scale multi-storey structure building, inside which a driver drives his car along a ramp until a vacant parking slot is found, and it is an aboveground and underground extention of conventional ground garages, and its major advantage is that a variety of sorts of vehicles can be parked therein. Among the major disadvantages of such type garage are large storage floor space needed, lower space utilization rate and long time taken to circle around the garage for vacant slots. Rush-hour car congestion may also happen.

Making use of mechanical lifting, sliding or rotating movements, the mechanical type garage can park twice or more times the number of cars in the same space as a conventional garage. In spite of its relatively simple structure and low cost, its storing and retrieving operations take long time, its extension capacity is limited by its own structure, the fact that this type of garage has too many moving parts affects its reliability, also this type of garage is not appropriate for storing large sized vehicles.

The aisle storing type garage has a relatively large parking capacity, can proceed storing and retrieving operations more conveniently and rapidly, and has a relatively high degree of automation. However, one aisle between two rows of parking spaces is needed for allowing movement of carrying means, this results in at least three times the floor space of a parking row to build such a garage. The fact it occupies extra floor space for aisles renders it unadaptable to tight places in cities.

The tower type and rotation tower type garages occupy less floor space, can execute rapidly parking and retrieving operations, but since one layer or storey of a tower can park only two or a confined numbers of cars, its capacity is quite limited. When it comes to accommodate increased numbers of cars, multiple towers need to be parallely connected together. The efficiency of entrances, exits and lifters of this type of garage is low.

Meanwhile, the known automated parking systems accommodate mainly small and medium sized vehicles, are not suitable for large and heavy ones.

Similar problems exist in the known automated warehouses as aisle storing type garages. Since one transport passage (aisle) is needed to be reserved for the stackers to move between two rows of racks, at least one-third of floor surface taken by the aisles results in more land occupation. Restricted by the ability of stackers, the racks can't be too high, and a stacker's travel distance (storage and retrival time) can't be too long, so the scale and capacity of warehouses are therefore limited. Similarly, aisle stackers have considerably difficulties and limitations in handling big and heavy goods.

At present, big or heavy goods are most frequently stored in a yard stacking manner, so are containers. For example, 3 to 6 (loaded or heavy) layers or 7 to 9 (empty) layers of containers are stacked in piles and arranged in rows outdoors. Containers are handled within yards by yard equipments such as RTGs(rubber-tyred gantry cranes), RMGs (rail-mounted gantry cranes), and terminal tractors, forklift trucks, reachstackers, straddle carriers etc. This kind of operations must be performed in an orderly manner, rehandlings are sometimes necessary for a container at a specific repository position. At container terminals, containers are conveyed by above-mentioned yard handling equipments together with mobile carrying equipments as trailers, straddle carriers, reachstackers and so on, to terminal handling equipments, such as ship-to-shore container cranes (or boarding bridges).

In summry, the common points of the present known automated warehousing/parking systems are: the warehousing/parking spaces are arranged along two sides of an aisle (transport passage for carriers), goods/vehicles are conveyed by aisle-stackers (carriers) along an aisle to a repository location, then lifted by the lifting means of the stacker to reach the height of a warehousing/parking space for storing the goods/vehicle, then transferred horizontally to the warehousing/parking space by a transferring apparatus of the stacker. The fact that aisles occupy one-third of the warehousing/parking floor surface results in larger land occupation. Furthermore, restricted by the ability of stackers, it is difficult for the above-mentioned systems to handle big and heavy goods/vehicles.

### SUMMARY OF THE INVENTION

In order to remove and decrease the above-mentioned problems related to prior art, the present invention provides a warehousing/parking method, a warehousing/parking system established according to the method and its application, the method and system being land-saving, having simplified structure, allowing storing and retrieving goods/vehicles easily and rapidly. Different specifications of goods/vehicles, including heavy and large sized ones, can be accommodated together. All the operations can be fully automated. Its modular structure enables unlimited extension of warehousing/parking capacity.

The present invention resolves prior art problems by offering a warehousing/parking method, comprising: providing at least one vertical storage block, each storage block including a plurality of storage layers or storeys, in each of which there are provided upper and lower goods/vehicle storage spaces, and a horizontal intermediate transport passage disposed between the upper and the lower goods/vehicle storage spaces, i.e. the transport passage is located in a different horizontal plane from that of the goods/vehicle storage spaces - the upper and the lower goods/vehicle storage spaces are positioned respectively above and under the transport passage, in which a carrier moves; a goods/vehicle placed on a pallet is conveyed by the carrier along the transport passage, and the storage and retrival operation for an upper or lower warehousing/parking space is performed by a lifting device of the carrier in a lifting manner; providing at least one vertical passage for a lifter, the vertical passage extends through the storage stories, and the lifter is movable up and down in the vertical passage, and exchanges goods/vehicle with the goods/vehicle storage space nearest to the vertical passage or with the carriers of the storage layers.

Based on the above warehousing/parking method, the present invention provides a warehousing/parking system, comprising: at least one vertical storage block, each storage block including a plurality of storage storeys, each of which comprises upper and lower warehousing/parking spaces, and a horizontal intermediate transport passage disposed between the upper and the lower warehousing/parking spaces, i.e. the upper and the lower storage spaces are positioned respectively above and under the transport passage; carriers, which are provided with lifting means, can move in the above-mentioned transport passages; and at least one vertical passage for a lifter, which passage extends through the storages storeys, the lifter is movable up and down in the vertical passage and exchangs goods/vehicle with the goods/vehicle storage space nearest to the vertical passage or with the carriers of the storage layers.

In addition, when the warehousing/parking system comprises at least two storage blocks, its lifter(s) is further capable of moving back and forth within the vertical passage so as to exchange goods/vehicles with the goods/vehicle storage spaces of each storage block or with the carriers.

According to a preferred embodiment of the present invention, the warehousing/parking system is provided with a plurality of pallets carrying goods/vehicles. The pallets may be flat, box or frame pallets, and are of given standardized specification. The pallets have positioning holes/grooves or pins of specific shapes, located at specific positions of pallet bottom and side. The shapes and layouts of these positioning holes/grooves or pins are so designed as to permit more close matching and cooperation of the pallets with other parts of the warehousing/parking system so that the pallets are firmly placed or attached to these parts.

Each warehousing/parking space comprises a fastening means for a pallet, used for firmly placing and attaching the pallet to the upper/lower warehousing/parking space: a set of bases for placing pallets is arranged in the lower warehousing/parking spaces, the bases holding an interval between the pallets placed thereon and the bottom of this storage layer; on both sides of the upper warehousing/parking space there are provided with a support base and a holder for supporting and fixing a pallet, and a holder control rod, which can control the holder to be positioned and locked at two points of unlocking and locking in a rotating, retracting, inclining or sliding manner.

Each storage storey of the warehousing/parking system is provided with a carrier, which can automatically move and position across the lower warehousing/parking spaces. The carrier is of "C" or " " shaped framework structure, in which frame there is provided a set of opposite lifting means. The two pairs of holding arms of the lifting means can hold a pallet with goods/vehicle on the pallet to move up and down, and retract, rotate or translate. The carrier is also provided with a poking device, which can control a holder to be positioned at two locking points, respectively, by poking a holder control rod.

The warehousing/parking system comprises a lifter/lifters which can carry pallets and goods/vehicles on the pallets to vertically move among the layers. The lifter(s) can be of flat or box type structure.

The bottom plate of the flat type lifter may be slightly smaller, larger or equal to the pallet speficication size. When the bottom plate is smaller than the pallet specification size, the width of the bottom plate is slightly smaller than the distance between the holding arms of the carrier. When the bottom plate is slightly larger than or equal to the pallet specification size, notches are provided in the bottom plate at locations corresponding to the holding arms of the carrier so that the holding arms can pass through the bottom plate.

The lifter(s) can carry a pallet and goods/vehicle on the pallet to lift them vertically among the layers. A horizontal transferring apparatus, which is capable of horizontally transferring the pallet and goods/vehicle on the pallet to a goods/vehicle storing space beside the lifter, may be provided in the lifter.

The warehousing/parking system may comprise buffer storage spaces, which are the ones disposed beside the vertical lifting passage and can temporarily store or store pallets with goods/vehicles on the pallets ready to be subjected to storing or retrieving operations. The lifter and carrier can perform a transferring and exchange of pallet and goods/vehicle through such a buffer storage space.

At entry/exit stations of the warehousing/parking system, a kind of pallet circulating apparatus which may be called as pallet-piler can be installed. The pallet-piler may be disposed beneath or beside an entry/exit station. The type of pallet-piler situated beneath an entry/exit station comprises a pallet lifting means, a pallet clamping device located at sides of the entry/exit station and a pallet sliding-supporting device which can project out below the pallet clamping device and support the pallet so as to move the pallet thereon. The type of pallet-piler situated beside an entry/exit station comprises a pallet lifting means, a pallet grasping device which seizes a pallet from its side(s).

In the upper spaces of the storing layers of the system, traverse stowage passage(s) may be arranged. In each of the traverse stowage passages is provided a stowage trolley capable of moving and positioning along the traverse passage. The stowage trolley is provided with a holder and a holder control rod.

The warehousing/parking system may comprise one or more entry/exit stations. Such stations are usually disposed beside lifter passages. Entry and exit stations may be arranged at same or different layers, or a plurality of entry/exit stations may be arranged at different layers. The stations may be arranged at any one of the storing spaces.

A storing/retrieving method of the warehousing/parking system:
When storing goods/vehicles, a goods or vehicle to be stored is placed on a pallet at an entry station. Then the pallet with the goods/vehicle on it is lifted by a lifter to an appointed layer and transferred to a carrier or a buffer storage space beside the vertical passage of this layer. Along the horizontal transport passage, the pallet with the goods/vehicle is conveyed by the carrier to a repository location, and placed into the appointed upper or lower space by lifiting operation of the lifting means of the carrier. When retrieving goods/vehicles, the above steps are operated in an inverted order (i.e. in an opposite order to that of the above steps of storing goods/vehicles).
When the carrier stores a pallet with goods/vehicle into a lower space, the holding arms of the lifting means of the carrier lower them downwards onto the base of the lower space. Then through rotating, retracting or translating, the holding arms locate themselves outside the pallet, and then the carrier is on call for next order. When the carrier stores a pallet with goods/vehicle into an upper space, firstly the holder of the appointed upper space is switched into an unlocked status. Then the holding arms lift the pallet with the goods/vehicle up to a level higher than the holder of the space. The holder is switched into a closed status and locked. Then the holding arms lower the pallet with goods/vehicle downwards and place them onto the holder. Then the holding arms may keep going downwards and stop at a predetermined level to be on call for next order. The concrete process is as below:

A first method of direct transferring between a lifter and a carrier may be adopted, as below:
When storing goods/vehicles:
   The entry/exit stations are typically arranged beside the lifter passage. A pallet with goods/vehicle is directly placed on the bottom plate of the flat type lifter. The lifter carries and moves the pallet with goods/vehicle to an appointed layer. The carrier of the appointed layer joins with the lifter, with its holding arms being retracted inside and situated under the pallet placed on the lifter bottom plate. Then the holding arms extend out (or pass through the notches in the bottom plate) to hold the pallet with goods/vehicle up to a suitable level for the carrier to carry the pallet with goods/vehicle. The pallet with the goods/vehicle is transferred to the carrier, and there is no obstacle between the carrier and the lifter. The lifter resets to be on next call. Then the carrier conveys the pallet with the goods/vehicle to a repository position appointed by the system and proceeds to complete the storage.
When the carrier stores a pallet with goods/vehicle into a lower space, the holding arms of the lifting means lower them downwards onto the base of the lower space. Then through rotating, retracting or translating, the holding arms locate themselves outside the pallet, and then the carrier is on call for next order.
When the carrier stores a pallet with goods/vehicle into an upper space, firstly the poking device of the carrier switches the holder of the appointed upper space into an unlocked status by means of the holder control rod. Then the holding arms lift the pallet with goods/vehicle up to a position higher than that of the holder of the upper space. The poking device pokes the holder to be located at a locking point below the pallet. Then the holding arms lower the pallet with goods/vehicle to place them on the holder. The holding arms may keep going downwards and stop at a predetermined level to be on call for next order.
When retrieving goods/vehicles, the above steps are proceeded in an inverted order.

A second method of transferring through buffer storage spaces may be adopted to make more efficient use of lifters and carriers.
Lifters or carriers are released to proceed next operation just after transferring a goods/vehicle to a buffer storage space, and there is no need for them to wait each other, so multiple operations can be proceeded simultaneously and the operating rate of the system is increased. Herein, entry/exit stations usually disposed beside the vertical passage (i.e. at location of a buffer storage). A goods/vehicle to be stored is placed on a pallet at the entry/exit station. Then the pallet with goods/vehicle is horizontally transferred by the lifter's transferring apparatus to the lifter, and is elevated by the lifter to a system-appointed layer, then is shifted again by the lifter's transferring apparatus to a buffer storage space of this layer, and afterwards is conveyed by a carrier to an appointed storing space.
When retrieving goods/vehicles, the above steps are proceeded in an inverted order.

Based on above-mentioned features, in order to further speed up the operating rate, the warehousing/parking system of this invention may include pallet-pilers at its entry/exit stations, which can alter the storing/retrieving operation mode by changing the pallet's status at entry/exit stations, and obviate the actions of delivering empty pallets. The lifters, the carriers and the whole system are ready at all times for an operation. When an empty storing space has no pallet, it is ready for accepting one with a goods/vehicle; there are a stack of pallets in a pallet-piler; there is a pallet at the entry/exit station ready for accepting a goods/vehicle. A storing operation begins once a goods/vehicle is placed on the pallet, and a new pallet is supplied by the pallet-piler right after the former one being moved away. When a retrieval operation is demanded, the pallet-piler turns rapidly the system into retrieving mode, i.e. the pallet-piler takes back the empty pallet before a pallet with goods/vehicle is conveyed to the entry/exit station by a carrier or a lifter. Considering a pallet-piler's capacity, when a pallet-piler is stacked full of pallets by successive retrieving operations, the stacked pallets are moved and stored to a storing space; and to the contrary, the stacked pallets are supplied to a pallet-piler when the pallets in this pallet-piler are run out.

The purpose of the invention may also be achieved through the following technical solution.

A container storing system of the present invention, comprising: at least one vertical storage block, each storage block including a plurality of storage layers, each storage layer comprises upper and lower container storage spaces, and a horizontal intermediate transport passage disposed between the upper and lower container storage spaces, the upper and the lower container storage spaces are arranged respectively above and under the horizontal transport passage. In the horizontal transport passage there is provided a carrier, which is movable across the lower container storage spaces along the horizontal transport passage and is provided with a lifting means; and a vertical passage extending through all the storage layers for a container crane, the spreaders of which can move within the vertical passage up and down, and exchange containers with transferring trolleys arranged at storage spaces beside the lifting passage, and translate horizontally to a location under the container crane, so that the container crane hoists and places containers to transferring trolleys.

A container terminal of the present invention, comprising: a terminal handling area consisted of container berthes and at least one container dockside crane (ship-to-shore crane), and a container storage area, *characterized in that*: several stowage overhead-tracks parallel to the gantry rails of the dockside crane(s) are arranged under the dockside crane(s); each overhead-track is provided with a plurality of terminal stowage trolleys. The container storage area and the terminal handling area are connected by a plurality of conveying tracks, through which containers are conveyed in two directions. The conveying tracks extend beneath and perpendicular to the overhead-tracks.

A container terminal handling method of the present invention, utilizing container dockside cranes, *characterized in that:*
when loading a ship, a container is conveyed along a conveying track by a conveying carrier/trolley from the container storage area to a location under an overhead-track. A vacant terminal stowage trolley on the overhead-track moves near, positions and aligns with the conveying carrier below the stowage trolley. Then the container is transferred to the terminal stowage trolley, the terminal stowage trolley carries and moves the container along the overhead-track to locate under a dockside crane (which is loading a ship) and aligh therewith, and then the crane hoists the container from the stowage trolley and place it into the ship.
   And vice versa, when unloading a ship: a crane trolley of the dockside crane hoists the container from the ship and place into a terminal stowage trolley which is waiting for a container below the crane, and then the terminal stowage trolley carries and moves the container along the overhead-track to a location above a vacant conveying carrier/trolley which is waiting on a certain conveying track. The container is transferred to the conveying carrier/trolley. Then the container is conveyed along the conveying track by the conveying carrier/trolley to the container storage area.

The present invention also provides a warehousing/parking management system for controlling and managing operation of the warehousing/parking system, *characterized in that:* the management system comprising: an information management subsystem, a logistics management subsystem, an automated storing/retrieving control subsystem and a status monitoring subsystem, wherein the information management subsystem is in charge of collecting, receiving and exchanging data, transmitting data through networks; the logistics management subsystem is in charge of distributing, scheduling, calculating fees, managing bills and predicting trends according to the client's requirements and the information, the time, quantity and destination of receiving/sending goods, of the information management subsystem; and the automated storing/retrieving control subsystem is in charge of controlling the operating units to execute storing/retrieving operations; the status monitoring subsystem is in charge of local and remote supervision, local and remote trouble shooting and diagnostics, as well as safety supervision.

The advantages of this invention lie in that: by eliminating the horizontal aisle of the conventional known storing system, the warehousing/parking system of this invention occupies less land surface, which renders it particularly suitable for a narrow and dense places. It can perform storage or retrieval operation rapidly and efficiently. It is fully automated, can proceed intelligent operations conveniently, without human intervention. Its structure is simple, highly reliable, and can be easily maintained with low cost. It can be built above ground, under ground, semi under-ground, or attached to side faces, top level or bottom layer of buildings, of which the main part may be reserved for commercial use or for other purposes. Different types of vehicles, goods or even both can be stored in a mixed manner. Its modular structure enables combination of multiple units of different specifications and unlimited extension of capacity. Within its close storage environment, there will be no operator intervention, an automated safeguard system may be installed to provide better safety and theft protection. Buffer storage adoption may speed up operating rate, multiple operations may be proceeded simultaneously, separately and independently. The efficiency of each module is improved. The operational time is diminished, and the rate of warehouse input-output is increased. Adoption of the pallet circulating device,i.e. the pallet-piler, resolves the problem of empty pallet storing and returning, which improves the operating efficiency of the whole system. Adoption of multiple entry/exit stations permits multiple simultaneous operations, which may shorten the system's clear up time and be useful especially for such parking places as exhibition centers, cinemas and theatres, gymnasiums, airports, transport stations and transport junctions etc., confronted with gusty parking needs. Steel structure or reinforced concrete structure may be used. With prefabricated modules, constructions can be done rapidly. It is also adaptable to construct transportable or temporary garages/warehouses.

The container storing system of this invention occupies less land, has large storing capacity, can be operated rapidly, and may enable automated, scientific and accurate stowage of container, may completely obviate the rehandling operations for container yards. The container terminal handling method of the present invention may decrease container terminal land occupation, achieve automated terminal handlings with no operator intervention, diminish handling work intension, lower costs, and significantly improve container handling efficiency, shorten handling time and detention time of ship, increase container terminal throughput. Direct connection between the container conveying means and terminal handling facilities eliminates passage choking trouble of transport passage of container. Internal combustion engine handling equipments, such as yard cranes, terminal tractors, forklift trucks, reachstackers, straddle carriers and so on, widely used now at stacking yards, are eliminated. Clear electric power is utilized instead, which produces less pollution, lower noise, and is beneficial to the environment; meanwhile, the electric power costs are low. Less types of equipments are utilized which results in less malfunctions and low maintaining cost. The container storing system of this invention is capable of integrating storage, distribution and transport functions, becomes a logistics center and a multimodal transport hub, and achieve centralized and automated logistics management. The economic efficiency can be significantly enhanced.

The implementation of the automated warehousing/parking system of the present invention will produce significant economical and social benefit.

### BRIEF DESCRIPTION OF THE DRAWINGS

The present invention is further explained in connection with the drawings and embodiments, wherein
FIG. 1 is a diagrammatic sketch which shows the structure of the warehousing/parking system;
FIGS. 2 shows the automated parking system and the carrier, respectively, in a front, a side and a top view;
FIG. 3 is a diagrammatic sketch which shows the process of storing a car in an upper and a lower spaces;
FIG. 4 is a diagrammatic sketch which shows the operation process of a type of pallet-piler;
FIG. 5 is a diagrammatic sketch which shows the operation process of another type of pallet-piller;
FIG. 6 shows an automated warehouse of the present invention in a cross-sectional view;
FIG. 7 shows an automated warehouse of the present invention in a top view;
FIG. 8 shows an automated warehouse of the present invention in a side view ;
FIG. 9 is a diagrammatic sketch which shows upper spaces of a container storage system (in a side and a top view);
FIG. 10 is a diagrammatic sketch which shows lower spaces of a container storage system (in a side and a top view);
FIG. 11 shows a carrier adopted by the container storage system in a front, a side and a top view;
FIG. 12 is a diagrammatic sketch which shows the process of storing a container into an upper space of the container storing system;
FIG. 13 is a diagrammatic sketch which shows the process of storing a container into a lower space of the container storing system;
FIG. 14 shows an stowage trolley adopted by the container storage system in a front, a side and a top view;
FIG. 15 is a diagrammatic sketch which shows a container storing system;
FIG. 16 is a diagrammatic sketch which shows a plan layout of a container storing system;
FIG. 17 is a diagrammatic sketch which shows a layout of a container terminal in a front view;
FIG. 18 is a diagrammatic sketch which shows a layout of a container terminal in a side view;
FIG. 19 is a diagrammatic sketch which shows a layout of a container terminal in a top view;
FIG. 20 shows a conveying carrier in a front, a side and a top view;
FIG. 21 shows a type of terminal stowage trolley in a front, a side and a top view;
FIG. 22 shows another type of terminal stowage trolley in a front, a side and a top view;
FIG. 23 is a diagrammatic sketch which shows the position relationship between a conveying carrier and a terminal stowage trolley during a process of container transfer;
FIG. 24 is a diagrammatic sketch which shows a process of container transfer;
FIG. 25 is a diagrammatic sketch which shows a layout of a container terminal.

### REFERENCE NUMERALS IN DRAWINGS

- 1: pallet
- 3: support(ing) base
- 5: carrier
- 7: lifter
- 9: pallet-piler

- 2: base
- 4: ho lder
- 6: holding arm
- 8: transferring apparatus
- 10: container crane
- 11: transferring trolley
- 13: conveying carrier
- 14: stowage trolley
- 15: bridge container crane
- 17: pallet lifting means
- 19: pallet clamping device
- 21: pallet grasping device
- 23: stowage overhead-track
- 25: hatch cover
- 27: arrow
- 29: container ship
- 31: crane trolley
- 33: lifting trolley
- 36: track

- 12: conveying track
- 13': conveying trolley
- 14': (terminal) stowage trolley
- 16: traverse passage
- 18: pallet grasping device
- 20: sliding-supporting device
- 22: container
- 24: passage for container trucks
- 26: railway
- 28: entry/exit station
- 30: dockside crane
- 32: gantry rail of dockside crane
- 35: lifting arm
- 37: slope

### DETAILED DESCRIPTION OF THE PREFERRED EMBODIMENTS

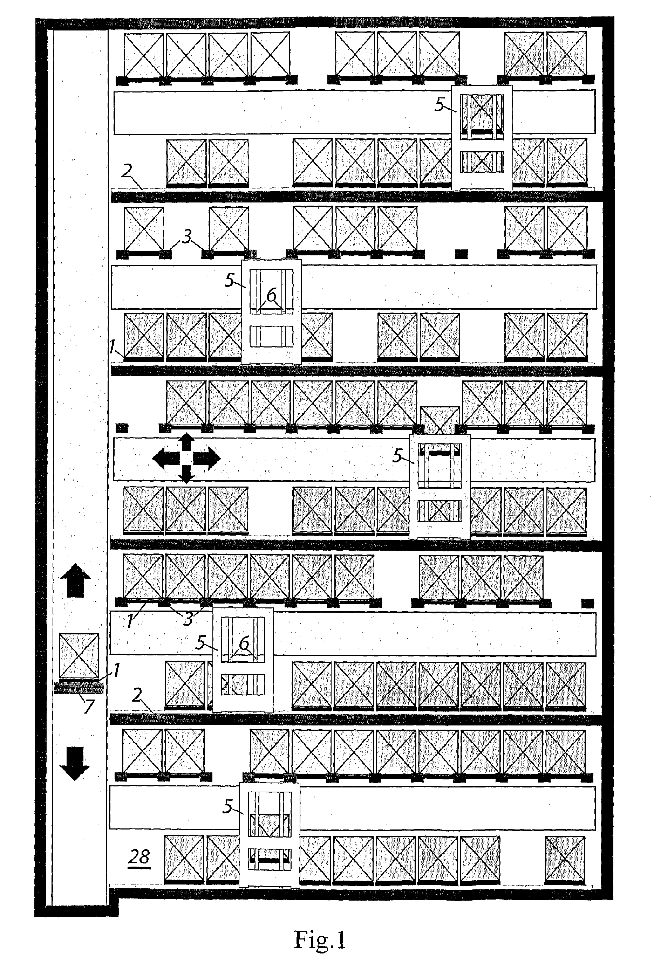

FIG. 1 is a diagrammatic sketch which shows the structure of a warehousing/parking system in a principle view, comprising: pallets 1 for loading goods/vehicles; bases 2 in lower storage space for placing pallets; support bases 3 in upper storage space for placing pallets; carriers 5 for transporting pallets with goods/vehicles thereon; holding arms 6 of lifting means of the carriers; and a lifter 7 for lifting goods/vehicles.

The warehousing/parking system, as illustrated in FIG. 1, comprises five storage stories or layers, each storage layer comprises a horizontal transport passage, upper and lower storage spaces for storing goods/vechicle, disposed respectively above and under the horizontal transport passage, in the horizontal transport passage there is provided a carrier 5, which can move along the horizontal transport passage across the lower storage spaces. A lifter 7 is provided in a vertical transport passage of the warehousing/parking system. The lifter 7 can be utilized in lifting pallets with goods/vehicles among the layers, and in exchanging and transferring them with carriers 5 in the storage layers or the storage spaces beside the vertical passage. The carrier 5, like two opposite synchronous forklifts, holds and conveys a pallet with its goods or vehicle to an appointed repository location. The goods or vehicle will be raised to an upper space or lowered to a lower space, for storage or retrival operation, by the holding arms 6 of the lifting means of the carrier 5.

### Example 1: automated parking system (garage)

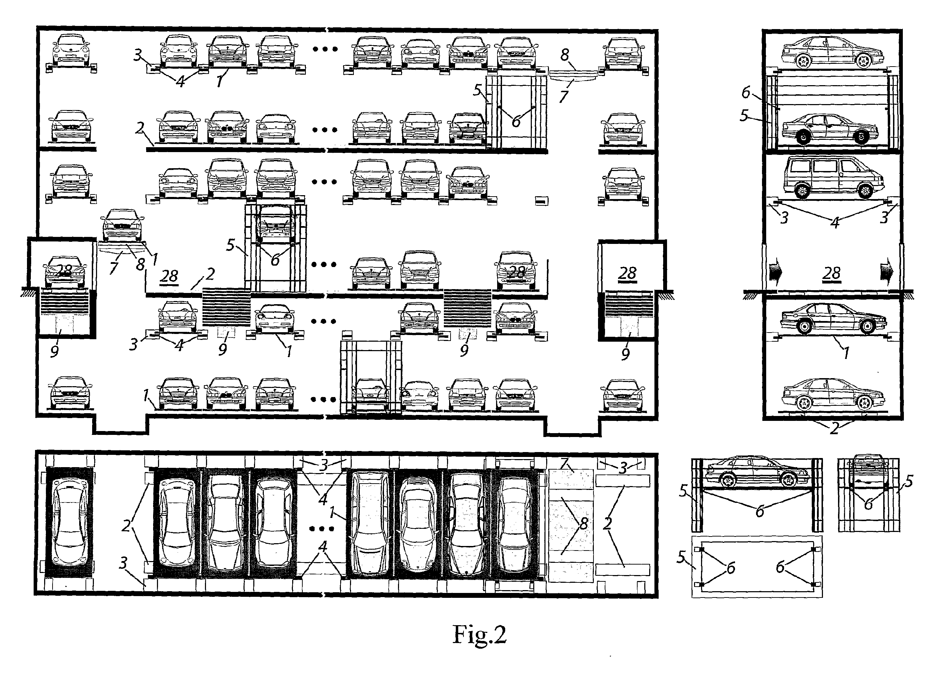

FIGs.2 to 5 show an embodiment of the present invention, which is an automated garage, comprising: pallets (vehicle-loading plate) 1; bases 2 in lower storage space; support bases 3 in upper storage space; holders 4 for holding pallets; carriers 5; holding arms 6 of lifting means of carriers; lifters 7 for lifting vehicles; transferring apparatus 8 in the lifter; pallet-pilers 9 and entry/exit stations 28.

FIG. 2 shows the automated garage and the carrier in a front, a side and a top view. The automated garage, as illustrated in FIG.2, comprises three parking layers (two above ground and one under ground) in a single column, i.e. six rows of parking spaces in all. Each parking layer comprises an upper row and a lower row of storage spaces, and a horizontal transport passage disposed between them. Among the layers, the height of ground layer (1^{st} floor above ground) is larger than that of other two layers, which renders it suitable for accommodating large sized vehicles. Each lower parking space is provided with bases 2 for placing pallet. Each upper parking space comprises support bases 3 its both sides, a holder 4 in each support base for supporting pallet and a holder controll rod for controlling the holder's status (not shown). The holder 4 can be switched by the holder control rod to be located and locked at two points/statuses (locked and unlocked) through rotating, retracting, inclining or sliding etc. Each parking layer comprises a carrier 5, which includes a running mechanism, a lifting means and a holder poking device (not shown). The carrier 5 can automatically move along the horizontal passage and locate. Since there are a lot of mature prior art technologies about running mechanism and locating device, there will be no more description concerning that. The tracks of the running mechanism may be installed at the bottom of the parking layer or in the middle transport passage. A lifter 7 is provided in each of the two vertical passages situated at two ends of the garage. Each lifter 7 comprises a transferring apparatus 8. The garage comprises four entry/exit stations 28, disposed on the two sides of each vertical passage in the ground layer. The garage comprises four pallet-pilers 9, respectively disposed at the bottom or side of an entry/exit station. The carrier 5 is of a " " shaped framework structure, inside which there is provided a pair of lifting means (not shown), of which two pairs of holding arms 6 can hold a pallet with a vehicle to move vertically. The holding arms 6 are retractable.

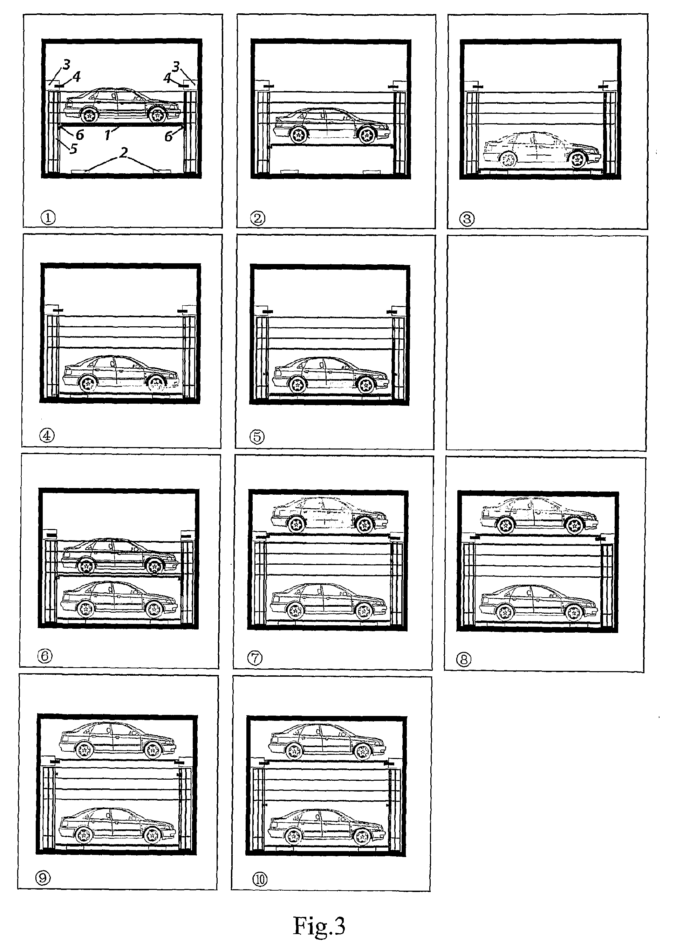

FIG. 3 is a diagrammatic sketch which shows the process of storing a car in an upper and a lower parking space. The storing/retrieving process in the upper and lower space by means of a carrier, are described with the help of FIG.3 as follows:

The lifting means of the carrier likes two opposite forklifts, the holding arms 6 conveys a pallet 1 with a vehicle along the transport passage across the lower spaces, see ① of FIG.3.

When storing a vehicle into a lower parking space: the carrier 5 comes to an appointed repository location; after verifying that the lower space is vacant, the holding arms 6 lower the held pallet with the vehicle downwards and place them onto the base 2 of the lower space, see ②, ③ of FIG.3. The holding arms 6 retract into the framework of the carrier 5, see ④ of FIG.3, this storage operation is completed. Afterwards, the carrier 5 is on call for next order. When the carrier 5 receives a next order, it moves towards the appointed repository location. The retracted holding arms 6 may uprise outside of the pallet on the base 2, see ⑤ of FIG.3.

When storing a vehicle into an upper parking space: the carrier 5 comes to an appointed location; after verifying that the upper space is vacant, the poking device (not shown) of the carrier 5 pokes the holder control rod (not shown) in support base 3 to make the holders 4 retract into the support bases and be locked. Then the holding arms 6 raise the pallet with vehicle until the bottom of the pallet is at a level higher than that of the holder 4, see ⑥ of FIG.3; and then the poking device of the carrier makes the holders 4 extend out and be locked, see ⑦ of FIG.3.

Then the holding arms 6 of the carrier lower and place the pallet with the vehicle onto the holder 4, see ⑧ of FIG.3; the holding arms 6 keep on descending, see ⑨ of FIG.3. Then the carrier 5 is on call for next order. When it receives a next order, the holding arms 6 may descend further and move towards next appointed repository location, see ⑩ of FIG.3.

When the carrier retrieves vehicle from a parking space, the operating process proceeds in an inverted order:

Retrieving vehicle from a lower parking space: after the carrier 5 arrives at an appointed location and verifies that there is a vehicle in this space, the retracted holding arms 6 pass through the outside edges of pallet 1 sitting on base 2 and descend to a level of bottom of pallet 1. Then the holding arms 6 extend out and hold pallet 1 with the vehicle upwards to the transport working level of the carrier 5, and place the vehicle onto the carrier, then the carrier 5 moves towards the lifter.

Retrieving vehicle from an upper parking space: after the carrier 5 arrives at an appointed repository location, the holding arms 6 uprise until the pallet 1 with the vehicle is raised above the holder 4. Then the poking device of the carrier 5 makes the holder 4 to retract into the support bases on two sides and be locked. Then the holding arms 6 hold the pallet 1 with the vehicle downwards to the transport working level of the carrier 5, and place the vehicle onto the carrier, then the carrier moves towards the lifter.

In order to effectively increase the operating speed, the storing spaces beside of the vertical passage are set as buffer parking spaces in this embodiment of the invention. The lifter and the carrier can transfer vehicles through these buffer spaces. The lifter exchanges vehicles with the buffer spaces through a transferring apparatus. The carrier may exchange vehicles with the buffer spaces by itself. The buffer spaces temporarily store or store pallets with vehicles which will be further operated. The entry/exit stations of the present embodiment are designed in a straightthrough manner (i.e. the entry/exit stations directly extend through), are situated at two sides of the vertical passage (i.e. at the locations of the buffer spaces). When being stored into the garage, a vehicle is placed on a pallet at an entry/exit station, then the pallet with vehicle is transferred to a lifter 7 by the transferring apparatus 8. Then the lifter holds the pallet with vehicle upwards to a storage layer appointed by the system. The transferring apparatus 8 shifts horizontally the pallet with vehicle to the buffer space of that layer, then the carrier transports them to an appointed space. When being retrieved from a parking space, the vehicle stored in the space is retrieved in an inverted order. In this mode, the lifter or the carrier can be released to proceed next operation once the vehicle is transferred to a buffer space. The time spent in waiting each other is saved. The lifter and the carrier can execute bidirectional operations. Storage and retrieval operations can be executed crosswise. Multiple storing and retrieving operations may be done simultaneously and independently, which significantly speeds up the operating rate and decreases the clear-up time of the garage.

In order to further speed up the operating rate, and obviate extra actions of delivering empty pallets (vehicle carrying plates), the garage embodiment of this invention may adopt pallet-pilers at its entry/exit stations, which can alter statuses of pallets at entry/exit stations, switch the storing/retrieving operation modes rapidly (there is no pallet at the entry/exit station in a retrieving mode, and there is a pallet at the entry/exit station in a storing mode), so that the lifters, the carriers and the whole parking system are ready at all moments for a storing or retrieving operation: an empty storing space without a pallet, is ready at all times for accepting a pallet with vehicle; there are a stack of pallets in a pallet-piler; there is a pallet at the entry/exit station, ready at all times for accepting a vehicle; a storing operation starts in the storing mode once a vehicle is placed on the pallet. Once the pallet with vehicle is moved away for storage, the pallet-piler will supply immediately a new pallet for next storing operation. When a retrieval operation is demanded, the pallet-piler can turn the system into a retrieving mode rapidly, i.e. the pallet-piler takes back an empty pallet from the entry/exit station (changing into a retrival mode) before a pallet with vehicle is transported to the entry/exit station by a carrier or a lifter. When the pallet-piler are stacked full of pallets by successive retrieving operations, according to the capacity of the pallet-piler, the stacked pallets are moved and stored to a empty parking space; and to the contrary, pallets are supplied to the pallet-piler when it runs out of pallets.

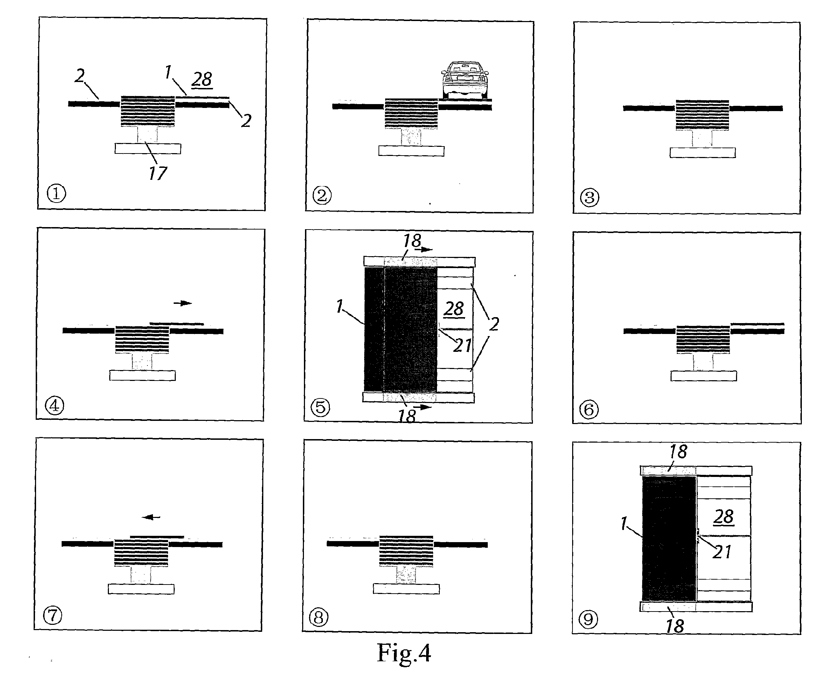

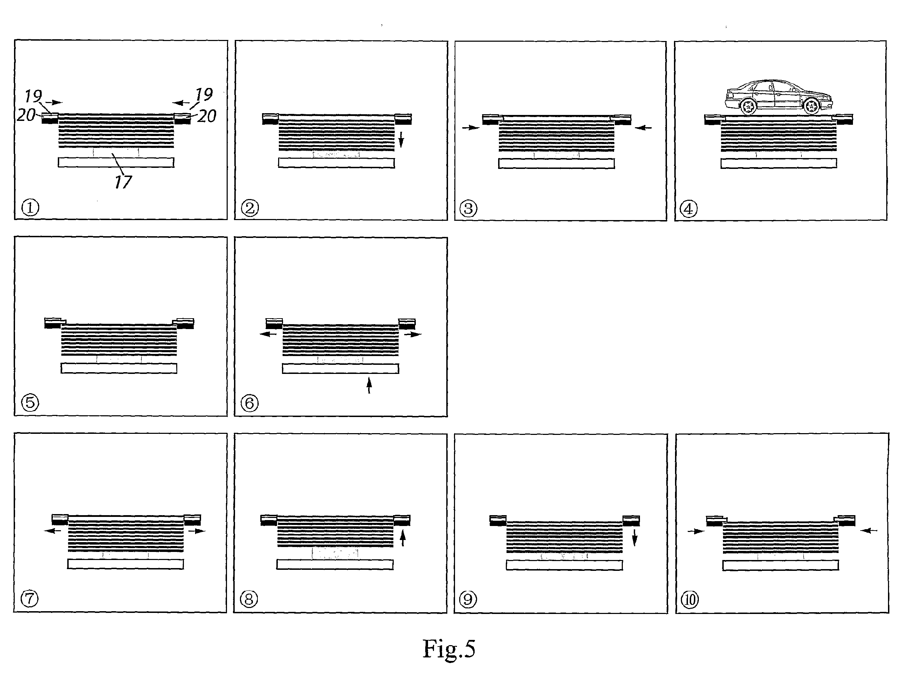

A pallet-piler may be disposed beside or beneath an entry/exit station, the two types of pallet-piler adopted in present embodiment of the invention are described in connection with FIGs.4 and 5:

The kind of pallet-piler situated beside an entry/exit station comprises a pallet lifting means 17 and a pallet grasping device 18 or 21, which seizes a pallet from its sides. The pallet lifting means may be disposed under or at side(s) of the pallets, see FIG.4, the pallet lifting means 17 and the pallet grasping device 18 or 21. The kind of pallet-piler beneath an entry/exit station comprises a pallet lifting means, a pallet clamping device situated at side(s) of the entry/exit station, and a retractable pallet sliding-supporting device situated below the pallet clamping device for supporting the pallet and moving it thereon. The pallet lifting means may be disposed under or at side(s) of the pallets, see FIG.5, pallet lifting means 17, pallet clamping device 19, and pallet sliding-supporting device 20.

The working process of pallet-piler 9:

FIG. 4 schematically shows the operating process of the type of pallet-piler situated at side of the entry/exit station.

In a storing mode, there is a stack of pallets on the pallet lifting means 17, an empty pallet is placed at the entry/exit station of the garage ready for accepting a vehicle, see ① of FIG.4; a car is parked on the pallet at the entry/exit station, see ② of FIG.4; then the pallet with car is moved and stored into the garage (at this moment, the entry/exit station is in a retrieving mode, because there is no pallet at the entry/exit station), see ③ of FIG.4; in order to turn the garage into a storing mode, the pallet grasping device 18 or 21 moves the top one of pallets on the pallet lifting means 17 to the entry/exit station, see ④ of FIG.4 and ⑤ of FIG.4 (in a top view); then waiting for next car to be stored, see ⑥ of FIG.4; changing the operating mode - when an retrieving order is received, the pallet grasping device 18 or 21 takes back the pallet from the entry/exit station and moves it back to the pallet lifting means 17, see ⑦ of FIG.4; then waiting for the pallet with the vehicle to be retrieved, see ⑧ of FIG.4 and ⑨ of FIG.4 (in a top view).

FIG. 5 shows the operating process of the type of pallet-piler situated at bottom of an entry/exit station.

In the pallet-piler, a pile of empty pallets stacked on the pallet lifting means 17, the pallet lifting means 17 lifts the pallets in such manner that the top pallet is at the same level as the ground level of the entry/exit station, and then the top one is clamped tight by the pallet clamping device 19, see ① of FIG.5; then the lifting means lowers the other pallets to reserve a space for the sliding-supporting device 20 to extend out or draw back, see ② of FIG.5; then the sliding-supporting device 20 extends out to hold the top pallet, ready for accepting a vehicle to be stored, see ③ of FIG.5; the vehicle is parked on the pallet, see ④ of FIG.5; the clamping device 19 releases the held pallet holding the vehicle, the pallet with vehicle is moved to a storage space (at this moment, the entry/exit station is in a retrieving mode, because there is no pallet at the entry/exit station), see ⑤ of FIG.5; then the sliding-supporting device 20 retracts, see ⑥ of FIG.5; the pallet lifting means 17 rises upwards to keep the new pallet on top at the ground level of the entry/exit station, repeating steps ② to ③ of FIG.5, then the entry/exit station being in storing mode again and preparing for next storage; changing the operating mode - when the entry/exit station is in storing mode, the pallet clamping device 19 clamps the pallet on top, upon receiving a retrieving order, the pallet-piler draws back the sliding supporting device 20, see ⑦ of FIG.5; the pallet lifting means 17 raises the other pallets to join the pallet on top, see ⑧ of FIG.5; the pallet clamping device 19 releases the pallet on top, the pallet lifting means 17 brings all the pallets down, see ⑨ of FIG.5; then the sliding-supporting device 20 extends out, keeping the entry/exit station in retrieving mode, and preparing for accepting a vehicle to be retrieved, see ⑩ of FIG.5.

The operations of the automated parking system of the present invention can be controlled automatically by a computer parking management system, which comprises an information management subsystem, a fee management subsystem, an automated storing and retrieving control subsystem and a status monitoring subsystem as below:

The information management subsystem is in charge of collecting vehicle data (types of vehicles, parking time etc.), checking if the vehicle is oversized or overloaded, transferring data/information through networks (wired, wireless, internal, external);

The fee collecting subsystem is in charge of calculating fees and managing bills according to types of vehicles, parking time and different kinds of payment etc.;

The automated storing and retrieving control subsystem is in charge of controlling the operating devices of the parking system such as lifters, carriers and pallet-pillers to execute storing/ retrieving operations;

The status monitoring subsystem is in charge of local and remote supervision, local and remote trouble shooting and diagnostics, safety supervision.

### Example 2: automated warehousing system

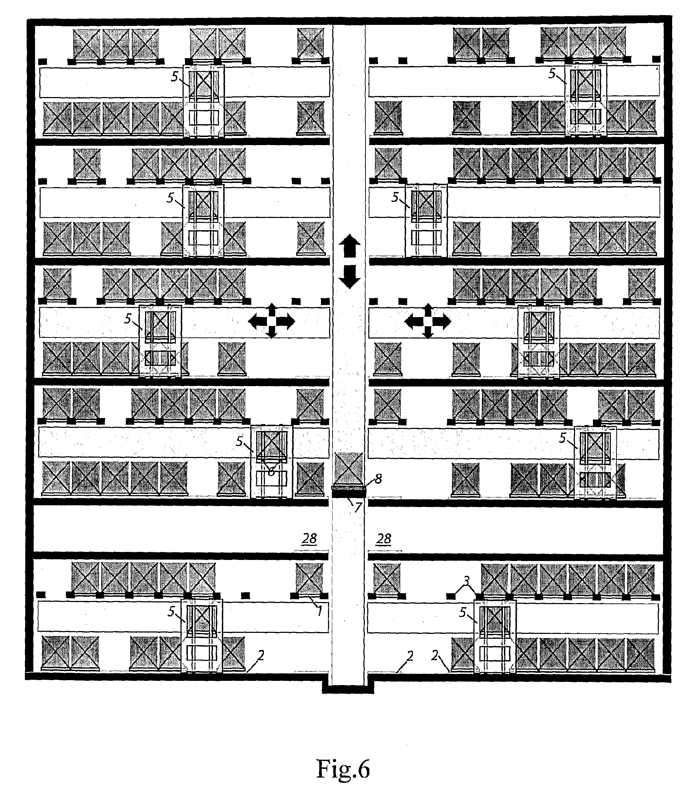

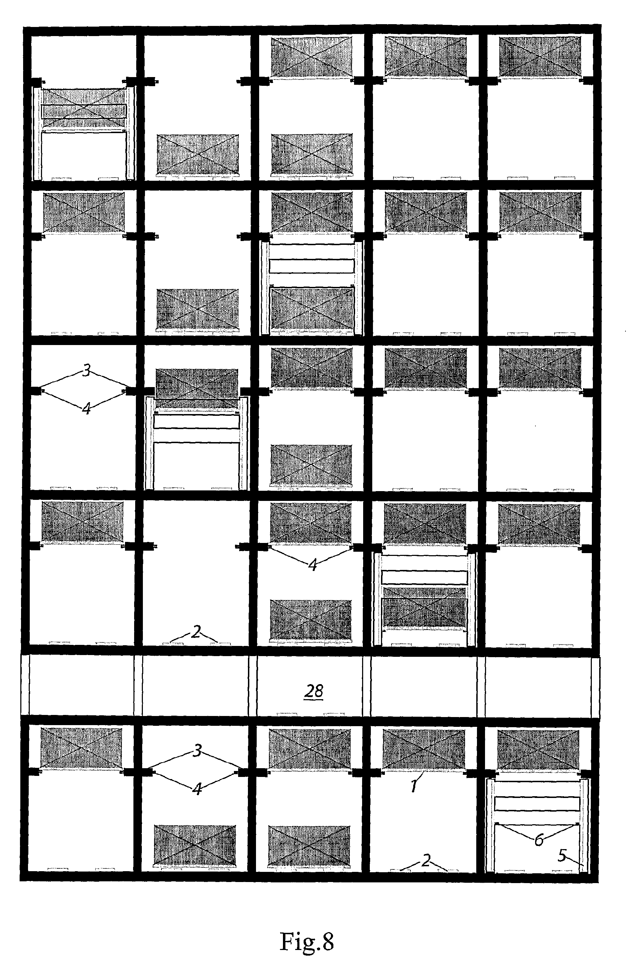

FIG. 6 to 8 show an automated warehouse embodiment of the present invention, comprising: pallets 1 for holding goods, bases 2 in lower spaces for placing pallets, support bases 3 in upper spaces, holders 4 in upper spaces for placing pallets, carriers 5, holding arms 6 of lifting means of carriers, lifters 7, transferring apparatus 8 of the lifter, and traverse passages 16 for carriers.

FIG. 6 to 8 show an automated warehouse of the present invention in a cross-sectional, a top and a side view.

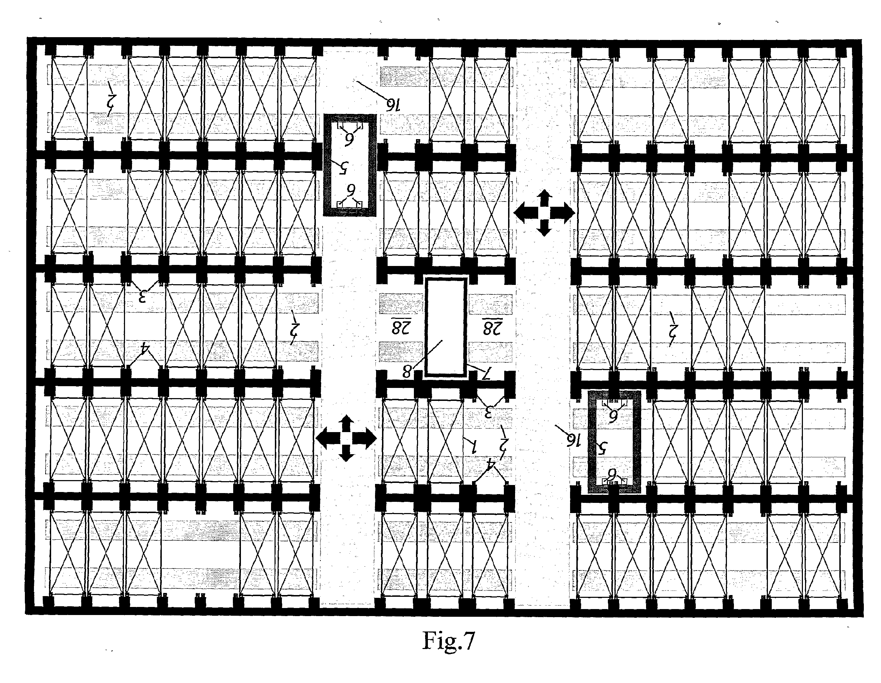

The automated warehouse embodiment of the present invention illustrated in FIG. 6 to 8 includes five vertical storage layers (each layer is in format of five rows and ninteen colums, see Fig.7), namely ten rows of vertical storage spaces in total, see Fig.6, which can accommodate up to 850 units of goods. The vertical passage in the middle of the warehouse is provided with a lifter 7 comprising a transferring apparatus 8. Two entry/exit stations are disposed respectively at both sides of the vertical passage. The four storage spaces of each layer, which are proximate to the vertical passage, are set as buffer storages. A traverse passage 16 is respectively disposed beside the buffer storages of each side of the vertical passage. Each storage layer is provided with two carriers 5, which can move along the storage layers and the traverse passage. The storing or retrieving operations of pallets at the upper and lower storage spaces are executed by carriers (with the same method adopted by example 1). The system may predict the most utilized goods and goods to be retrieved and put them in advance into buffer storages to increase the retrival operating speed. Through buffer storages, multiple operating lines may be dealed with.

The running of the automated warehouse is controlled by a warehouse management system, which comprises an information management subsystem, a logistics management subsystem, an automated storing/retrieving control subsystem and a status monitoring subsystem:

The information managment subsystem is in charge of collecting, receiving and exchanging of data (quantity, position, volume, weight, form and status of goods, information about consignors, schedules etc), transferring data through networks (wired, wireless, internal, external);

The logistics management subsystem is in charge of distributing and scheduling according to customers' demand or the internal information of the system such as date of receiving or delivery, quantities or destinations, as well as calculating fees, managing bills, predicting trends;

The automated storing and retrieving control subsystem is in charge of controlling the implementing units of the system to execute storing or retrieving operations;

The status monitoring subsystem is in charge of local and remote supervision, local and remote trouble shooting and diagnostics, safety supervision.

Building of the automated warehousing/parking system:

The automated warehousing/parking system of the present invention can be built above ground, under ground or semi-underground as independent building structures, or as affiliated structure attached to the upper or lower layer of other buildings. For example, automated garages may be built independently at streets, airports, bus or railway stations, hotels or shopping centers; automated garages may also be respectively attached to underground and top of an emporium, and the other intermediate layers therebetween form the main structure of the emporium. Other examples are: an automated garage may be built on top of the main structure of a car dealer's show center; a semi-finished articles warehouse of a factory may be disposed on top of a production workshop. An automated storing system may form main structure of a logistics center.

### Example 3: container terminal adopting a container storing system

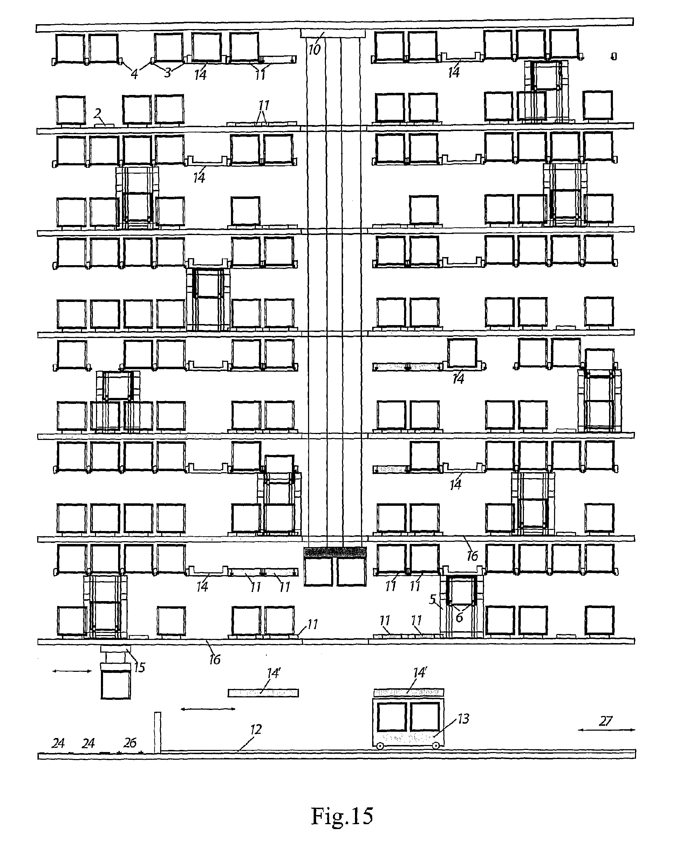

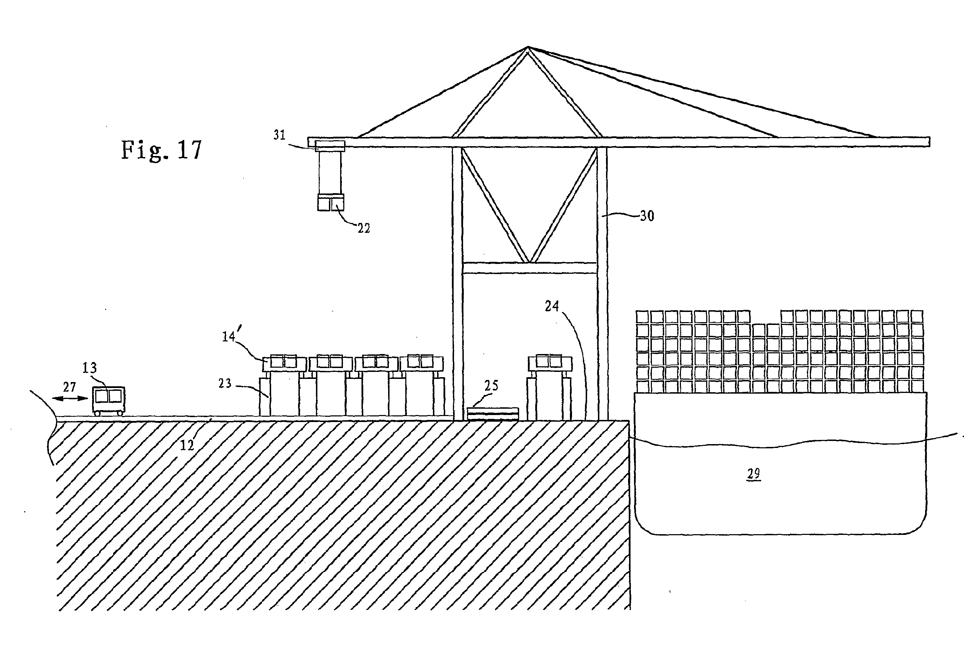

The container terminal of the present embodiment comprises a container a storage area adopting a container storing system as illustrated in FIG.15 and a container terminal handling area as illustrated in FIG.17.

The container storing system is a special case of the storing/parking system of the present invention, which doesn't utilize pallets, and which utilizes container cranes instead of lifters according to the invention for lifting containers among the layers. The storages spaces adjacent to the vertical passage are reserved for the transferring trolleys, which can horizontally move to a location under the crane, then the crane can unload containers to the transferring trolleys, the transferring trolleys of lower and upper spaces are respectively provided with corresponding bases 2, holders 4 and holder control rods (not shown).

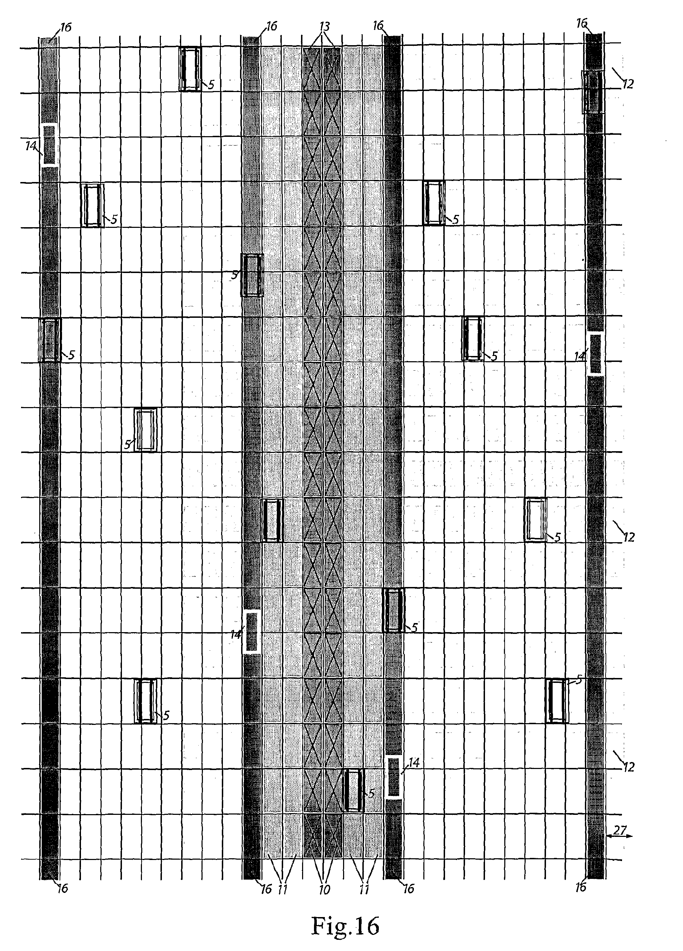

As shown in FIG.15 and 16, a container crane 10 is disposed in the vertical passage of the container storage system, and is equipped with double 40 feet spreaders, which can hoist four containers of 20 feet or two containers of 40-50 feet or the combination thereof. In each storage layer, the two storage spaces, adjacent to one side of the vertical passage respectively, of the upper and lower rows of storage spaces, are provided with two transferring trolleys 11 (totally 8 trolleys in each layer). The two adjacent transferring trolleys 11 on the same side or on both sides of the vertical passage may be used as buffer storages at one time to supply or receive containers to be handled from/to the container crane 10. See Fig.16, each storage layer is divided into two segments by the vertical passage, for the segment on each side, two carriers 5 are arranged in average for every three rows of storage spaces, and also two traverse passages 16 are arranged at both sides of the segment, for transferring of carriers 5 among different rows of the storage spaces. Through the traverse passages 16, carriers 5 can move among several neighboring rows of spaces and handle containers in upper and/or lower storage spaces. In upper part of a traverse passage 16, a stowage trolley 14 is installed (see Fig.15). The stowage trolley 14 is provided with a holder and a holder control rod, and may move and locate itself along the traverse passage 16. Carriers 5 may exchange containers with the stowage trolleys 14.

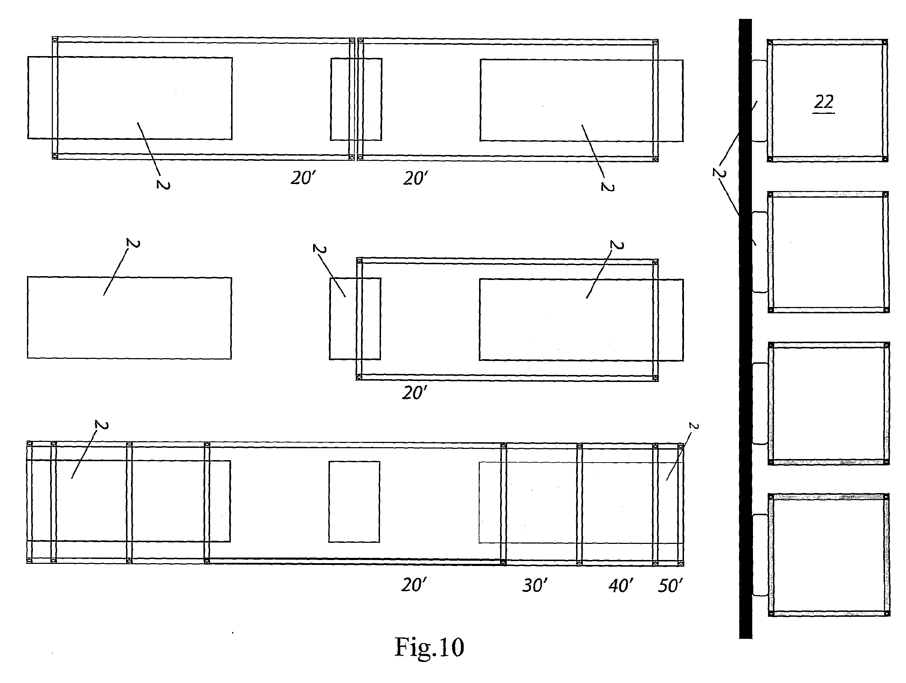

FIG.10 is a diagrammatic sketch of lower spaces of the container storing system. As illustrated in FIG.10, the lower spaces comprise a set of bases 2 for placing containers. The width of the base is equal to or slightly less than the distance between the holding arms 6 of carriers 5. Containers of various specifications (such as a single 20 feet container, a single 30 to 50 feet container or two 20 feet containers etc) may be placed on bases 2 as illustrated in the figure.

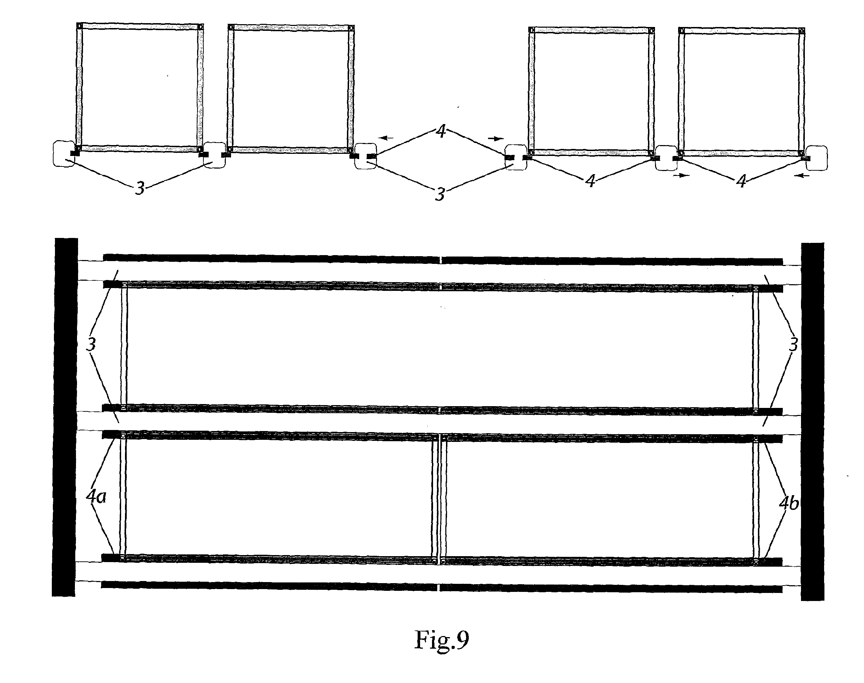

FIG.9 is a diagrammatic sketch of upper spaces of the container storing system. As illustrated in FIG.9, the upper spaces comprise support bases 3 which transverse the whole space, holders 4 which can retract into the support bases 3, and holder control rods (not shown). Holders 4 are divided into two parts 4a and 4b from the middle point, which can be separately controlled by holder control rods.

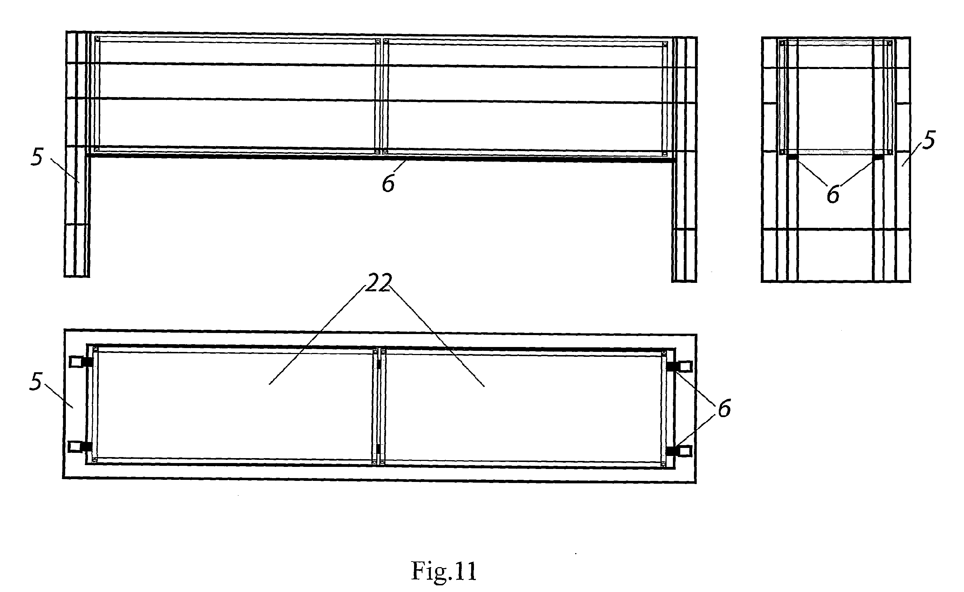

FIG.11 shows a carrier adopted by the container storage system in a front, a side and a top view. The carrier 5 comprises a running mechanism, a lifting means and a holder poking device (not shown). The holding arms 6 of the carrier 5 are a pair of connected-type arms, which can respectively rotate or translate towards outside.

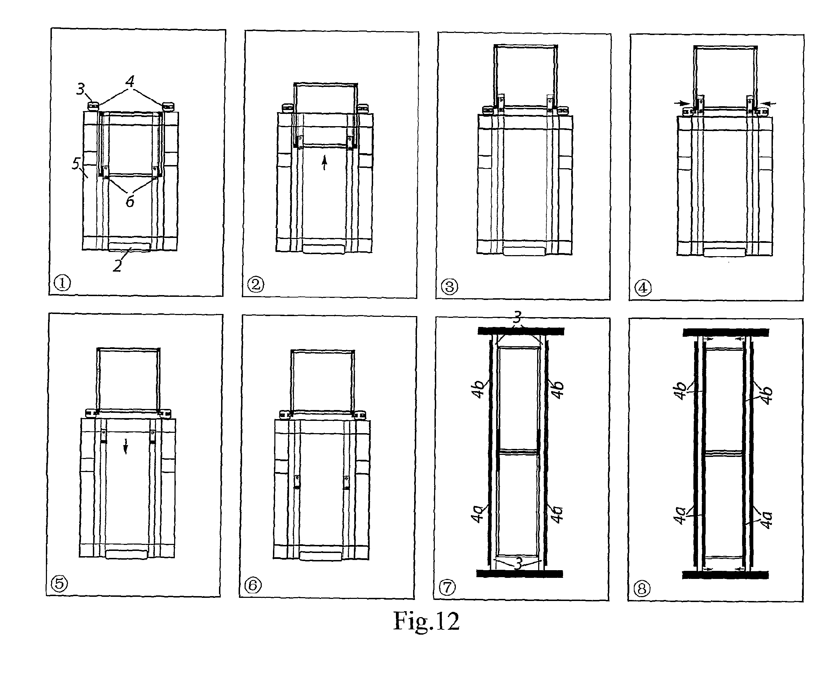

Fig. 12 is a diagrammatic sketch showing a process of storing a container into an upper space according to this embodiment of the container storing system. The process is as follows:

With its holding arms 6 supporting the container, the carrier 5 moves across the lower spaces, see ① of FIG.12; the carrier 5 comes to an appointed repository position and verifies that the upper space is vacant, the poking device of the carrier 5 pokes the holder control rod (not shown) on support base 3 to make the holder 4 retract into the support base 3 and be locked. Then the holding arms 6 raise the container until the bottom of the container is at a higher level than that of the holder 4, see ②, ③ and ⑦ (top view) of FIG.12; then the poking device makes the holder 4 extend out and be locked, see ④ and ⑧ (top view) of FIG.12; then the holding arms 6 descend and place the container onto the holder 4, see ⑤ of FIG.12; the holding arms 6 keep on descending a bit, see ⑥ of FIG. 12. Then the carrier 5 is on call for next order.

When the carrier retrieves containers from a storing space, the operating process goes in an inverted order:

Upon receiving an retrieval order, the carrier 5 arrives at the storing position of the container, the holding arms 6 uprise and hold the container placed in the upper space. Then the poking device of the carrier 5 makes the holder 4 retract into the support base 3 and be locked. Then the holding arms 6 hold the container to go downwards to the transport working level of the carrier 5, then the carrier 5 moves towards the lifter.

The process of transferring containers by the carrier with a stowage trolley 14, disposed at the upper part of a traverse passage 16, is similar to that of storing containers in upper storage spaces.

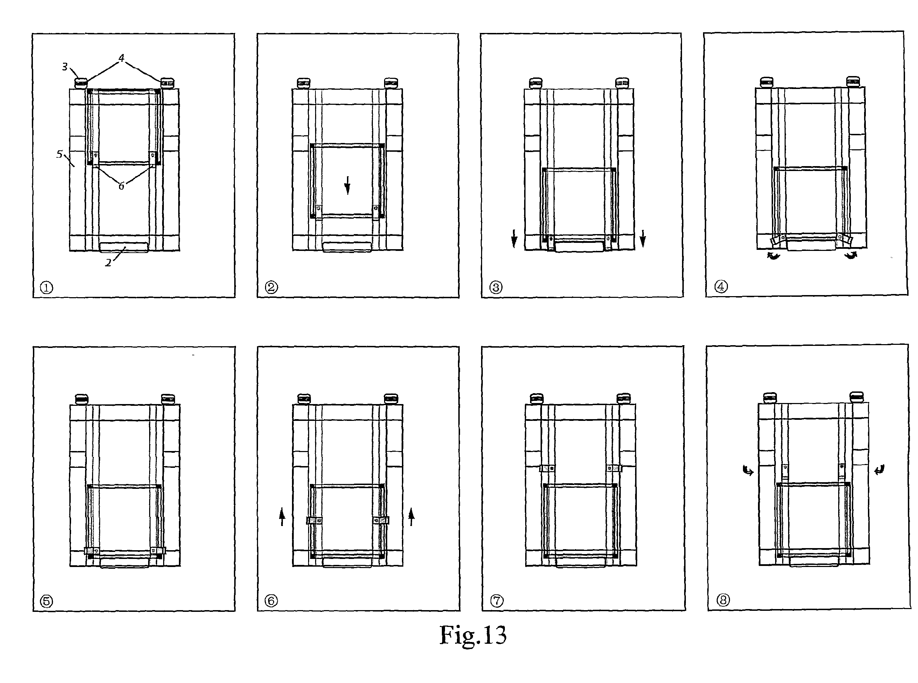

Fig. 13 is a diagrammatic sketch showing a process of storing a container into a lower space of the container storing system. The process is presented as follows:

With its holding arms 6 holding the container, the carrier 5 moves across the lower spaces, the carrier 5 comes to an appointed repository location and verifies that the lower space is vacant, see ① of FIG.13; the holding arms 6 lower the container down and place it onto the base 2 of the lower space, then the holding arms keep on descending a bit, see ②, ③ of FIG.13; then the holding arms 6 rotate respectively by 90 degree outwards, see ④ of FIG.13, the holding arms 6 are situated outside the container borders, see ⑤ of FIG.13, then the holding arms 6 rise up along the outside borders of the container placed on the base 2, see ⑥, ⑦ of FIG. 13; then the holding arms 6 rotate respectively by 90 degree inwards, see ⑧ of FIG. 13; Then the carrier 5 is on call for next order.

When the carrier retrieves containers from a lower storing space, the operating process goes in an inverted order:

After receiving a retrieving order, the carrier 5 arrives at the repository location, and verifies that this location is not empty, the holding arms 6 rotate respectively by 90 degree outwards, and descend along the outside borders of the container placed on the base 2 to a level of the bottom of the container, then the holding arms 6 rotate respectively by 90 degree inwards to position under the container, then the holding arms 6 hold the container to rise up, until reaching the transport working level of the carrier 5, then the carrier 5 moves towards the lifter.

In the process of retrieving a container from a lower space, the carrier 5 can also adopte adjustable holding arms, which means, the holding arms 6 translate outwards respectively, then rise up or descend along the outside borders of the container.

Retrieval and relocation of 20 feet containers:

Two same containers of 20 feet can be placed in a same storage space and be stored or retrieved with above mentioned steps. Two 20 feet containers placed in an upper storage space may be retrieved separately: upon receiving an order for retrieving one of the containers, the carrier 5 comes to the repository location and verifies that there is a container in this location. The holding arms 6 of the carrier 5 hold up the two containers placed on the holder 4. Then the poking device of the carrier pokes the holder control rod to make the holder 4a on one side to extend out and be locked (the holder 4b on the side of the container to be retrieved does not extend out). Then the holding arms 6 lower the held containers, the one not to be retrieved is replaced on the holder 4a, the one to be retrieved is lowered further by the holding arms 6 to the transport working level of the carrier 5. Then the carrier 5 moves towards the lifter.

The storing of a single 20 feet container can be proceed in an inverted order.

When a single 20 feet container needs to be relocated from one side of a storage space to the other side of the storage space, the transfer can be done with the help of a stowage trolley 14. The container is firstly transferred to a stowage trolley 14 from a carrier 5. The stowage trolley 14 carries the container to move transversely to the other side of the storage space. The container is transferred back to the carrier 5. Then the carrier 5 stores the container into the appointed location.

The 20 feet containers in lower spaces may be relocated with above mentioned method after being transferred to upper spaces.

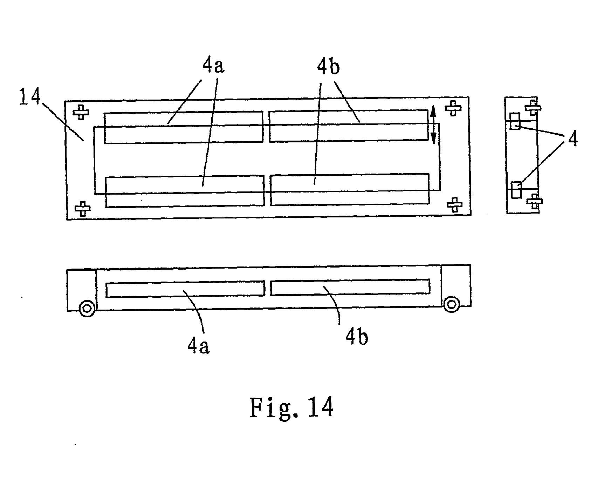

FIG. 14 shows a stowage trolley 14 adopted by the present embodiment of container storing system in a front, a top and a side view. The stowage trolley 14 comprises a running mechanism (not shown), a holder 4 and a holder control rod (not shown). The holder 4a and 4b may be separately controlled to translate or to retract.

As shown in FIG. 15, the container handling area comprises container truck passages 24, a railway 26, a bridge container crane 15, stowage trolleys 14' respectively disposed on two sides of the vertical crane passage.

Container storing or retrieving method:

In the container storing system of the present example, as shown in FIG. 15, when storing containers, the containers are transferred from container trucks or trains of the container handling area or from conveying carriers 13 to the stowage trolley 14' by the container crane 15. The stowage trolley 14' translates to the position under the container crane 10 of the vertical passage (or the containers may be conveyed by conveying carriers 13 along conveying tracks 12 to the position under the container crane 10). Then the container crane 10 raises the containers to an appointed layer. The transferring trolleys 11 (two trolleys of the same side or of each inner side) of the (upper or lower row of) layer translates to the position under the crane 10. The container crane 10 places the hoisted containers onto the transferring trolleys 11. The transferring trolleys 11 return to their original places with the containers. The containers are kept temporarily by the transferring trolleys 11 acting as buffer storages until carriers 5 move them to other appointed spaces.

FIG.16 is a diagrammatic sketch showing the plan layout of the present embodiment of the container storing system. As illustrated in FIG.16, when retrieving containers, at an entry/exit station for a particular storage block, within the scope of several neighboring blocks, the containers may be handled by carriers 5 of that area. The carriers 5 take the containers from their storing space according to related scheduling and transfer them to buffer storages (i.e. transferring trolleys 11) near that entry/exit station. Beyond a certain longer distance, the containers may be taken by carriers 5 nearby and transferred to stowage trolleys 14 above the traverse passages 16, through which the containers are transferred to carriers 5 of the area near the entry/exit station. Thus the containers may be transferred between different areas and stored into buffer storages near the entry/exit station (or directly stored into buffer storages by remote carriers). Then the containers may be discharged to conveying carriers 13 at the entry/exit station by the container crane 10, and transported along conveying tracks 12 to the terminal handling area, or the containers may be discharged to transferring trolleys 11' at the passageway by the crane 10, then transferred by the bridge container crane 15 to container trucks or trains waiting at the rear container handling area, or the containers may be transferred by stowage trolleys 14' to conveying carriers 13 on delivery trucks 12. See FIG. 15 and 16.

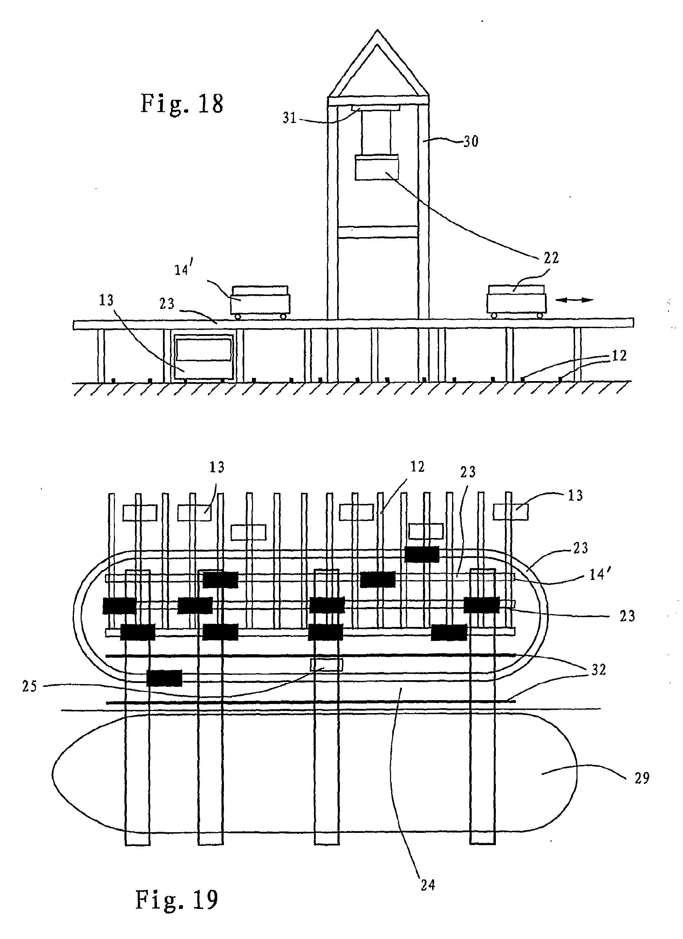

FIG. 17, 18 and 19 are diagrammatic sketches showing a layout of a container terminal (in a front, a side and a top view). A plurality of conveying tracks 12 are disposed between the container storage area and the container terminal handling area to connect them. Conveying carriers 13 are disposed on conveying tracks 12, and execute bidirectional transportation between the two areas. A plurality of stowage overhead-tracks 23, parallel to the dockside crane gantry rails 32, are disposed beneath the dockside crane 30 of the handling area. Each overhead-track is provided with a number of terminal stowage trolleys 14'.

As illustrated in FIG. 17, 18 and 19, the container terminal of the present example comprises: dockside crane 30, stowage overhead-tracks 23, conveying tracks 12, as well as conveying carriers 13 and terminal stowage trolleys 14', which move respectively on the conveying tracks and overhead-tracks. The conveying tracks 12 extend under the overhead-tracks 23 perpendicular thereto. In the present pratice example, three overhead-tracks are disposed under the crane 30 within the backreach scope thereof; a stowage overhead-track, disposed within the gantry frame of the crane 30, is connected to a track, disposed outside the backreach scope, to form together a loop overhead-track. On the two overhead-tracks behind and nearer to the crane 30, terminal stowage trolleys 14' are installed, whose number corresponds to that of the cranes 30, that is, each crane 30 has a corresponding terminal stowage trolley 14' on either of the two overhead-tracks. One or two terminal stowage trolleys 14' are disposed on the third stowage overhead-track. Several terminal stowage trolleys 14' are disposed on the loop overhead-track. A deposit place for hatch cover 25 and a container truck road 24 are also disposed within the gantry frame of the dockside crane 30. Some containers containing special or dangerous goods may be handled through the container truck road 24. In the drawings, reference numeral 32 represents the gantry rails of the dockside crane 30, on which the dockside cranes 30 travels. Arrow 27 represents the transport direction in which the conveying carriers 13 run along the conveying tracks 12 from the terminal handling area to the container storage area and vice versa.

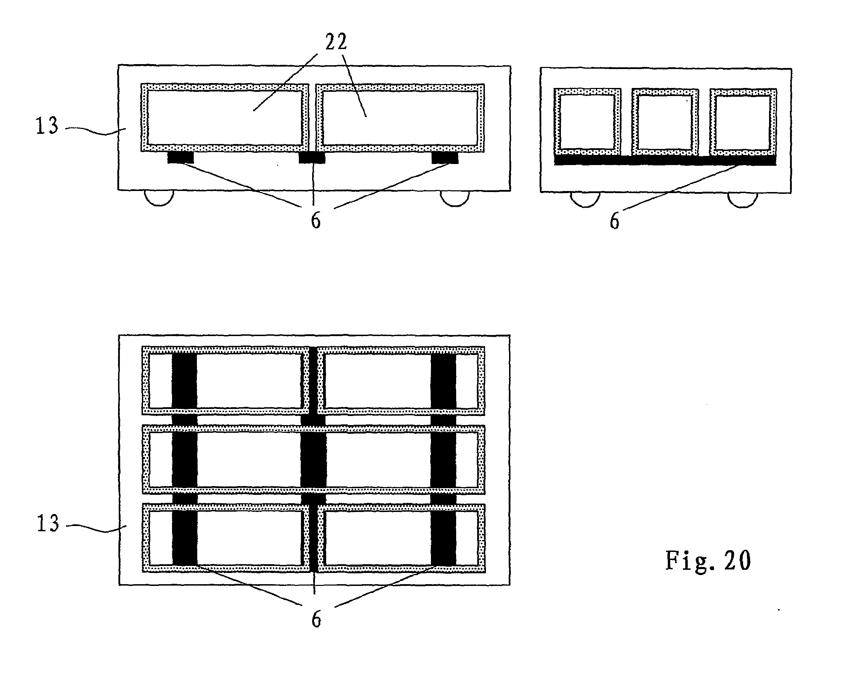

FIG. 20 shows a conveying carrier 13 in a front, a side and a top view. The conveying carrier may automatically move and locate along the conveying track 12. The conveying carrier 13 comprises a running mechanism (not shown) and a lifting means. The conveying carrier may be regarded as a simplified version of the container carrier 5, which means, cancelling the function of operating downwards, there is no need for the holding arms to rotate or translate. The three holding arms 6 of the lifting means can hold up transversely the containers placed thereon, with the two side arms disposed near the two ends of the containers and the middle arm holds a 40 to 50 feet container or two side by side 20 feet containers in the middle thereof. The conveying carrier can simutaneously accommodate 2 to 3 rows of 40-50 ft containers or two side by side 20 ft containers or combination thereof. The ④ of FIG. 20 shows in a top view a conveying carrier 13 which may accommodate 2 rows of containers.

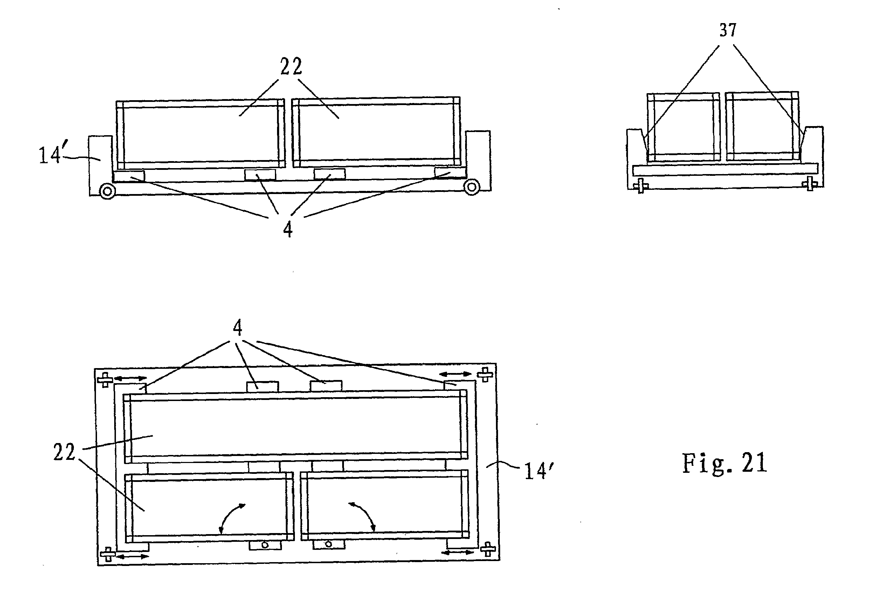

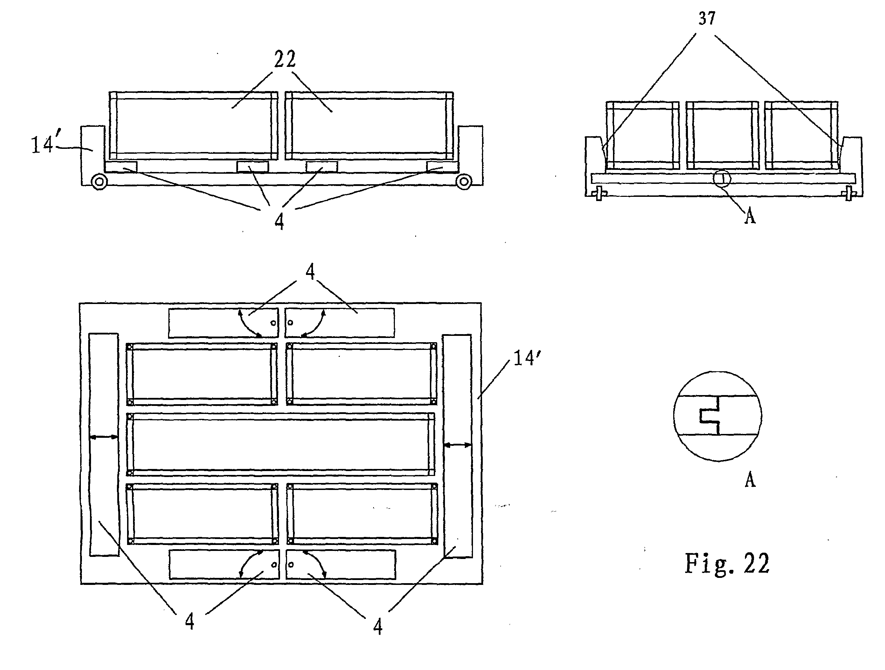

FIG. 21 and 22 respectively show a terminal stowage trolley 14' in a front, a side and a top view. The terminal stowage trolley 14' can travel along an overhead-track 23 automatically, and align itself wtih dockside crane or a conveying track. The terminal stowage trolley 14' comprises a running mechanism (not shown) and holders 4. Holders 4 can translate and/or rotate in order to allow the containers to go through the trolley 14' or to hold the containers from below. Among the holders 4, the side holders 4 can translate, and the middle holders 4 can rotate so as to overlap with free ends thereof onto the opposite cross beam of the trolley frame or the opposite holder. The terminal stowage trolleys 14', which can also simutaneously accommodate 2 to 3 rows of 40-50 ft single containers or two side by side 20 ft containers or combination thereof, are matchable to conveying carriers 13 and trolleys 31 of cranes 30. FIG. 21 shows a terminal stowage trolley 14' in a front, a side and a top view, which can accommodate 2 rows of containers. FIG. 22 shows a terminal stowage trolley 14' in a front, a side and a top view, which can accommodate 3 rows of containers. The middle two pairs of holders 4 can rotate inwards from two sides of the terminal stowage trolley 14' and join with their free ends in middle (see view A of FIG.22). As shown in the side views of the two drawings, the inside lateral faces of the terminal stowage trolleys 14' are designed as slopes, to facilitate introduction of containers into the trolleys 14'.

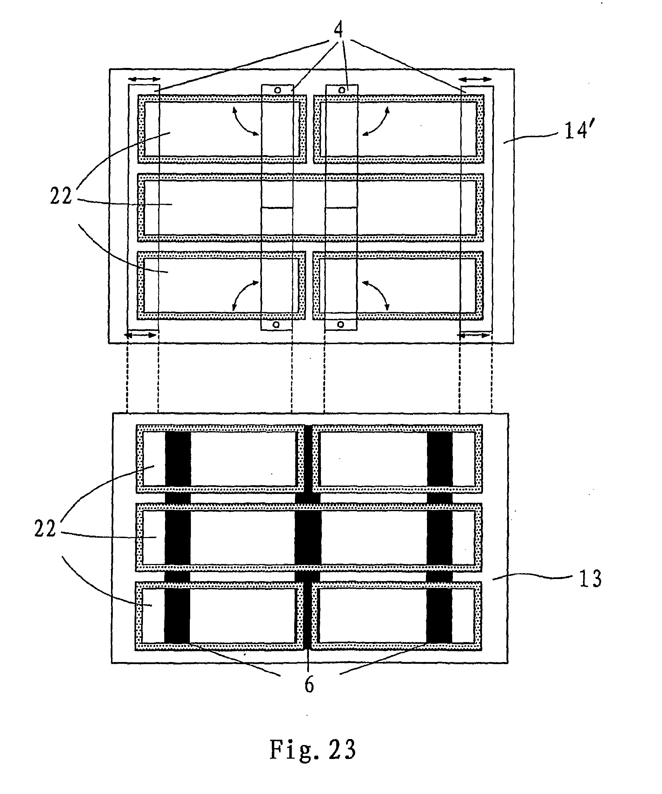

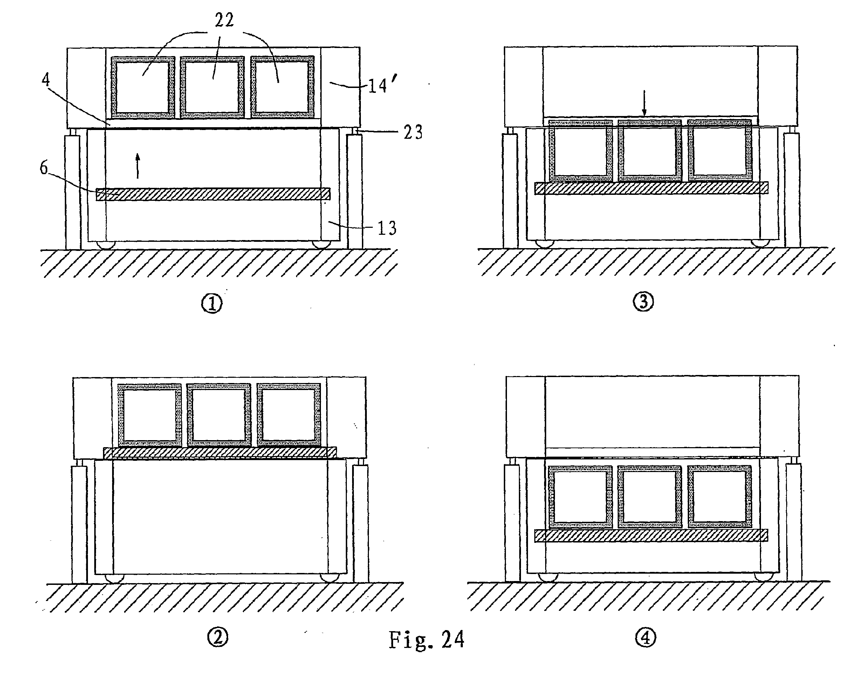

FIG. 23 is a diagrammatic sketch which shows the space position relation between conveying carrier and terminal stowage trolley when transferring containers between them. When a conveying carrier 13 is aligned with a terminal stowage trolley 14' situated on an overhead-track 23 above the carrier, their relative relationship is shown in FIG.24, the middle holding arm 6 of the conveying carrier 13 are situated between two middle pairs of holders 4 of the terminal stowage trolley 14', the two side holding arms 6 of the conveying carrier 13 are situated inside the two side holders 4 of the terminal stowage trolley 14'.

FIG. 24 is a diagrammatic sketch which shows the container transfer process between a conveying carrier and a terminal stowage trolley. As illustrated in FIG. 24, when a transfer from a terminal stowage trolley to a conveying carrier occurs, the terminal stowage trolley 14' carrying containers 22 is located above an empty conveying carrier 13 on a certain conveying track 12 below the trolley 14', the holding arms 6 of carrier 13 rise up to hold up containers 22 from the bottom of the terminal stowage trolley. The holders 4 of the terminal stowage trolley translate or rotate to retract into the trolley. Then the holding arms 6 of the conveying carrier 13 hold the containers 22 to descend to the bottom of the conveying carrier 13 to complete the transfer. The containers then are transported to the storage area along the conveying track; and vice versa, when a transfer from a conveying carrier to a terminal stowage trolley occurs, a conveying carrier 13 carrying containers is located below an empty terminal stowage trolley 14' on a certain stowage overhead-track 23, the holders 4 of the terminal stowage trolley translate or rotate to retract into the trolley. Then the holding arms 6 of the conveying carrier 13 hold the containers 22 to rise up to a position where the bottom of the containers is higher than the holders 4 of the terminal stowage trolley. Then the holders 4 of the terminal stowage trolley translate or rotate to extend out. Then the holding arms 6 of the conveying carrier 13 hold the containers 22 to descend and put the containers on the holders 4, and keep on descending, the containers are now transferred to the terminal stowage trolley 14'.

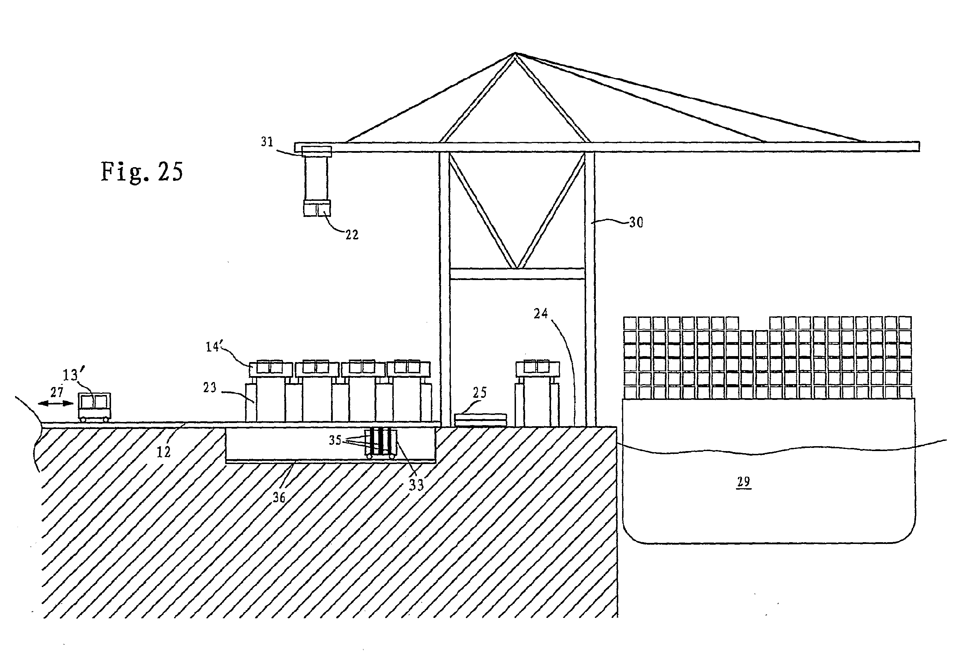

FIG. 25 is a diagrammatic sketch which shows another container terminal layout. FIG. 25 shows another conveying manner between the container storage area and the terminal handling area. There are still a plurality of conveying tracks 12 connecting the two areas. Conveying trolleys 13', which convey containers in two directions, are disposed on the conveying tracks 12. A track 36 for a lifting trolley 33 to move is disposed under the crossing region of a conveying track 12 and an overhead-track 23. The lifting trolley 33 is provided with lifting arms 35, which can pass through the notch of the bottom of the conveying trolley 13', and lift the containers 22 placed on the conveying trolley 13' up onto the terminal stowage trolley 14' on the overhead-tracks 23 to complete the transfer of containers between the conveying trolley 13' and the terminal stowage trolley 14'.

In present example, the invention further provides a new container terminal handling method:

The container terminal of the present example comprises a container storage area, adopting a container storing system; a rear container handling area shown in FIG. 15; and a container terminal handling area shown in FIG. 17, 18, 19 and 25. A plurality of conveying tracks 12 are provided to connect the storage area and the terminal handling area. Conveying carriers 13/conveying trolleys 13' on conveying tracks 12 can convey containers in two directions. Several stowage overhead-tracks 23, parallel to the gantry rails of container dockside cranes, and a plurality of terminal stowage trolleys 14' are arranged under the cranes 30 in the handling area. The terminal stowage trolleys 14' can move along the overhead-tracks 23, and locate and align with the crane trolleys 31 of the cranes 30 above and with the conveying carriers 13/conveying trolleys 13' on conveying tracks 12 below, and the conveying carrier 13/conveying trolleys 13' can exchange containers with the terminal stowage trolleys 14' on the stowage overhead-tracks above.

A terminal handling method, wherein when loading a ship: a container 22 is conveyed along a conveying track 12 by a conveying carrier 13 from the storage area to a location under an overhead-track 23; a vacant terminal stowage trolley 14' on the overhead-track moves near and aligns with the conveying carrier 13 below, the container is transferred to the terminal stowage trolley 14'; then the terminal stowage trolley 14' carries the container along the overhead-track and locates under the container crane 30, and aligns with the crane trolley 31; the crane trolley 31 hoists the container from the terminal stowage trolley 14' to the ship 29 to complete a loading.
And vice versa, during an unloading operation: the crane trolley 31 of the container crane 30 hoists the container 22 from the ship 29 to the terminal stowage trolley 14' waiting under the crane 30; then the terminal stowage trolley 14' carries the container 22 along the overhead-track, locates and aligns with a vacant conveying carrier 13 on a conveying track below; the container 22 is transferred to the conveying carrier 13 and then is conveyed along the conveying track 12 by the conveying carrier 13 to the container storage area.

For a specific dockside crane, a container truck in the truck passage under the gantry frame or a vacant terminal stowage trolley on the loop stowage overhead-track or on the three overhead-tracks within the backreach scope may be alternatively chosen to carry handling operation out. On either of the two overhead-tracks near the crane, a corresponding terminal stowage trolley is provided for the specific crane. The two trolleys alternatively exchange containers only with the crane and the conveying carriers on the conveying tracks within its operating scope, that is, the transfer of containers executed by the two trolleys concerns only the storage area connected by the above-mentioned conveying tracks. One or two terminal stowage trolleys are arranged on the third overhead-track, and several terminal stowage trolleys can be arranged on the loop overhead-track. These terminal stowage trolleys may exchange containers with the conveying carriers on all the conveying tracks under the overhead-tracks, which means, their transfer of containers concerns the whole container storage area. So the stowage of a specific container may be easily achieved, for example, to store a refrigeration container, discharged from a certain bay of a ship, to a specific refrigeration container stacking region, or vice versa, to store a refrigeration container, discharged from a specific refrigeration container stacking region, to a certain bay of a ship. The loop overhead-track under the gantry frame of the crane may shorten the moving distance and time of the crane trolley. The above handlings may be proceeded simultaneously and in parallel under control according to ship stowage plan.

Besides, mechanical rotors (not shown) may be installed on the terminal stowage trolleys and/or the conveying carriers, for mounting/dismounting twistlocks of containers. The loop overhead-track may directly extend to the container storage area (not shown).

The container terminal of the present example is managed by a container terminal management system, which comprises an information management subsystem, a container management subsystem, an automated storing and retrieving control subsystem and a status monitoring subsystem.

The information managment subsystem is in charge of collecting, receiving and exchanging data (quantity, position, volume, weight, form and status of containers, information about consignors, schedules etc), and transferring data/information through networks (wired, wireless, internal, external).

The container management subsystem is in charge of distributing and scheduling according to customers' demand or the internal information of the system such as date of receiving or delivery, quantities or destinations, as well as calculating fees, managing bills, ship stowage.

The automated storing and retrieving control subsystem is in charge of controlling the operating devices to execute storing/retrieving operations.

The status monitoring subsystem is in charges of local and remote supervision, local and remote trouble shooting and diagnostics, and safety supervision.

The container terminal and the handling method of the present invention are characterized in that: by adopting a container storage system instead of conventional yard stacking, any container at any repository location may be handled at any time. Rehandlings and transfers of yards of containers are eliminated. The container receiving deadline may be met. The transport efficiency, handling efficiency and the ship stowage accuracy are increased. Conventional yard handling equipments such as RTGs, RMGs, forklift trucks, reachstackers, straddle carriers etc. are abolished. The container storage area is connected to terminal handling equipments such as dockside cranes (or to boarding bridges of air terminals) by container conveying tracks and carriers instead of conventional mobile carrying machines such as trailers, straddle carriers, forklift trucks, reachstackers etc. Parallel conveyance of containers by conveying carriers on a plurality of conveying tracks, supplemented with container trucks transportation, which eliminates aisle intersections of transport passages at conventional container terminals, thus eliminates the source of traffic jam, the transport efficiency and rate will be significantly improved. Alternative operations with a plurality of terminal stowage trolleys on a plurality of overhead-tracks and with container trucks may effectively guarantee the operation efficiency of dockside cranes. Adopting self-location of terminal stowage trolleys, which diminishes the degree of difficulty and time utilized for the crane spreaders to catch containers. Multiple container spreaders may be adopted (4, 6, 8 or even 12 containers may be hoisted at one time, only one time of container alignment is required). By increasing numbers of containers being hoisted at one time, the handling rate will be significantly improved, the detention time of container will be shortened, the throughput of the terminal will be increased. The internal combustion engine handling equipments widely used at present are eliminated, clear electric power is utilized instead, which produces less pollution, lower noise, and which will be beneficial to the environment.

The container terminal and the container handling method provided by the present invention are not only applicable to container ports adopting the storing system of the present invention, but also to the renovation or expansion of present existing ports utilizing conventional container stacks, which may significantly improve the handling rate and the throughput.

### Other examples:

Automated warehousing and parking system of logistics centers: warehouses and garages can be separately disposed aboveground or underground of logistics centers, the ground floors of main structures may be used as handling, sorting, discharging/charging as well as management area.

Automated garages of fire control or emergency centers: fire engines or ambulances parking on ground floors are ready at all times for a sudden turnout. Then ground floors are filled up immediately with vehicles previously parking on other floors for next call. Either of the parking spaces may be provided with supply facilities capable of feeding vehicles with firefighting or relieving goods at all times.

Automated warehousing and parking system of stations, airports, building materials stores, shopping centers and so on: at locations of the above-mentioned public places where guests boards or descends and goods or luggages are loaded or discharged, vehicles are automatically returned or stored, belt conveyors are disposed to make it more convient for the guests to board, descend, load or discharge goods. Garages and warehouses of emporiums may be separately disposed on lateral sides, underground or top of the emporiums.

Automated parking system of taxi waiting area of such places as airports, stations, hotels and so on: the automated parking system may recall taxis in an orderly manner. Resting areas are arranged for taxi drivers. Which obviates the trouble for drivers of keeping on starting and moving the cars and waiting in all kinds of weather, meanwhile diminishes pollutions.

Automated parking system of public transportation junctions and starting stations for buses: the garages may be built above- or under-ground, passengers and vehicles are parted (separated). Vehicles are recalled according to starting orders and schedules. Maintenance areas may be arranged within the garages to repair, maintain and clean vehicles.

Railway container stations: the container storing systems of the present invention may be built along railway tracks. Containers may be handled on arrival and departure lines to shorten the detention time. It is possible to run scheduled container trains and to diminish stations and yards land occupation.

To adapt to the developing trend of huge container vessels, an island type semi-submersible container transfer platform may be constructed in deep water area far off the shore, on which the container storing system of the present invention and container handling facilities are built, and which forms a container transship hub port.

## Claims

1. A warehousing/parking method, **characterized by**:
providing at least one vertical storage block, each block including a plurality of storage layers; each layer comprising upper and lower storage spaces or slots, and a horizontal intermediate transport passage disposed between the upper and the lower storage spaces, the upper and the lower storage spaces are positioned above and under the transport passage respectively;
providing a carrier which can travel in the transport passage, a goods/vehicle placed on a pallet is conveyed by the carrier along the transport passage, and is stored into or retrieved from the upper or lower storage spaces in a lifting manner by means of a lifting means provided in the carrier;
Providing at least one vertical passage for a lifter, the vertical passage extending through the storage layers, and the lifter can move up and down in the vertical passage and exchange goods/vehicle(s) with the storage spaces nearest to the vertical passage or the carriers of the storage layers.

2. The warehousing/parking method according to claim 1, wherein when the warehousing/parking system comprises at least two storage blocks, the lifter can also move back and forth in the vertical passage, so as to exchange goods/vehicles with the storage spaces or carriers of different storage blocks.

3. A warehousing/parking system, **characterized by**:
at least one vertical storage block;
each storage block including a plurality of storage layers;
each storage layer comprising upper and lower storage spaces, and a horizontal intermediate transport passage positioned between the upper and lower storage spaces, the upper and the lower storage spaces are positioned above and under the transport passage respectively;
said horizontal transport passage is provided with a carrier which comprises a lifting means and can travel along the horizontal transport passage; and
at least one vertical passage for a lifter, the vertical passage extending through the storage layers, and the lifter can move up and down in the vertical passage and exchange goods/vehicle(s) with the storage spaces or carriers of different storage blocks.

4. The warehousing/parking system according to claim 3, wherein when said warehousing/parking system comprises at least two storage blocks, the lifter can also move back and forth in the vertical passage and exchange goods/vehicles with the storage spaces or carriers of different storage blocks.

5. The warehousing/parking system according to claim 3, wherein the warehousing/parking system comprises a plurality of pallets carrying goods/vehicles,
said pallets being flat, box or frame type and being of special specifications,
said pallets having positioning holes/grooves or pins of specific shapes located at specific positions of the bottom and the side faces of said pallets, the shapes and layouts of these positioning holes/grooves or pins being so designed as to permit close matching and cooperation of the pallets with other parts of the warehousing/parking system to enable stable placement or attachment of the pallets on or to these parts of the warehousing/parking system.

6. The warehousing/parking system according to claim 3, wherein each storage space comprises a fastening member in order to secure a pallet to the upper/lower storage space:
each lower storage space comprising a base for holding the pallet from below, and reserving an interval between the pallet placed thereon and the bottom of this storage layer; and
each upper storage space comprising a supporting base at both sides thereof, in which a holder for supporting pallets is provided, and the holder can be under control locked at open and close statuses respectively.

7. The warehousing/parking system according to claim 3, wherein the carrier can move and position automatically along the horizontal transport passage and is provided with a set of lifting means, of which holding arms can hold the pallets with goods/vehicles on it to move up or down, and the holding arms can also retract, rotate or translate.

8. The warehousing/parking system according to claim 7, wherein the carriers are provided with a poking device for controlling the holders to located and be locked at open or close status.

9. The warehousing/parking system according to claim 3, wherein the lifter in the vertical passage can vertically hold and lift the pallet with goods/vehicle among the storage layers, and is provided with a horizontal transferring means which can horizontally transfer the pallet with goods/vehicle on it to the storage space beside the lifter.

10. The warehousing/parking system according to claim 3, wherein the system comprises buffer storage spaces, which are the ones positioned beside the vertical passage and can temporarily store pallets with their goods/vehicles before further storage or retrieval operation; said lifter and carrier can exchange pallet with goods/vehicle on it with a buffer storage space respectively.

11. The warehousing/parking system according to claim 3, wherein the system comprises a pallet-piler at an entry/exit station, said pallet-piler being arranged beneath or beside an entry/exit station:
the pallet-piler beneath an entry/exit station comprising a pallet lifting means, a pallet clamping device situated at sides of the entry/exit station and a retractable pallet sliding-supporting device situated below the pallet clamping device and for supporting and moving pallets thereon;
the pallet-piler beside an entry/exit station comprising a pallet lifting means, a pallet grasping device which seizes a pallet from its side(s).

12. The warehousing/parking system according to claim 3, wherein in upper part of the storage layer there is provided a transverse stowage passage, in which there is provided a stowage trolley capable of moving and positioning transversely along the stowage passage, and the stowage trolley is provided with a corresponding holder.

13. A storing/retrieving method for the warehousing/parking system according to one of claims 3 to 12, wherein the method comprises the steps of:
when storing goods/vehicles, placing goods/vehicle to be stored on a pallet at the entrance/exit station; lifting the pallet with goods/vehicle on it by the lifter to an appointed layer and transferring them to a carrier of that layer or a buffer storage space beside the vertical passage; moving the pallet with goods/vehicle on it by the carrier along the horizontal transport passage to an appointed storage space; and placing the pallet with goods/vehicle on it by the lifting means of the carrier into the appointed upper or lower storage space in a lifting manner; and
when retrieving goods/vehicles, the operating steps proceed in an inverted order.

14. The storing/retrieving method according to claim 13, wherein
the carrier places a pallet with goods/vehicle on it into a lower storage space with the steps of: lowering the pallet with goods/vehicle on it by the holding arms of the lifting means of the carrier down onto the base of the lower storage space; then the holding arms rotate, retract or translate to leave themselves outside of the pallet, and then they go up beyond the pallet so that the carrier is on call; and
wherein the carrier places a pallet with goods/vehicle on it into an upper space with the steps of: firstly making the holder of the appointed upper space be positioned at unlocked open status; then the holding arms of the lifting means lifting the pallet with goods/vehicle on it up to a position higher than that of the holder of the storage space; making the holder of the space be positioned at close status and locked; then the holding arms of the lifting means lowering the pallet with its goods/vehicle down and placing them onto the holder of the space to accomplish the storing operation; and then the holding arms keeps on going down to a predetermined level to be on call.

15. The storing/retrieving method according to claim 13, wherein when the lifter transfer goods/vehicle directly with a carrier, the method comprises the steps of:
placing the pallet with goods/vehicle on it directly on the bottom of the lifter; moving the pallet with its goods/vehicle by the lifter to an appointed layer; docking of the carrier of the appointed layer with the lifter, the holding arms of the lifting means of the carrier being retracted outside the pallet and situated below the pallet on the bottom of the lifter; then the holding arms extending out to hold the pallet and its goods/vehicle and lift them up to transfer them to the carrier; the lifter being reset to be on call for next operation; and then the carrier carrying the pallet with its goods/vehicle to a storage space appointed by the system and storing them into the storage space.

16. The storing/retrieving method according to claim 13, wherein when the lifter transfer goods/vehicle with a buffer storage space, the method comprises the steps of:
providing buffer storage spaces so as to effectively enhance efficiencies of the lifter and the carrier, wherein the lifter exchanges goods/vehicle with the carrier through the buffer storage space, and the lifter or carrier can be released and begin a next operation just after the lifter or carrier transfers the goods/vehicle to the buffer storage space, without waiting one another; so that several operations may be simultaneously and independently started in parallel for further quicken operation speed of the system.

17. The storing/retrieving method according to claim 13, wherein providing a pallet-piler at an entrance/exit station of the warehousing/parking system, the pallet-piler comprises a stack of pallets and can quickly alter the storing/retrieving operation mode by changing the pallet's status at the entry/exit station: wherein
in the storing mode, there is a pallet at the entrance/exit station ready for accepting goods/vehicle, and in the retrieving mode, there is no pallet at the entrance/exit station;
a storing operation starting in the storing mode once goods/vehicle is placed on the pallet;
the pallet-piler being ready at any time to supply a new pallet for next storing operation at the entry/exit station once the system is turned into retrieving mode as previous pallet with goods/vehicle on it being moved away;
the pallet-piler being also ready at any time to take back an empty pallet at the entrance/exit station to turn the system into the retrieving mode - the pallet-piler takes back empty pallet at the entry/exit station before the pallet with goods/vehicle is placed into the entry/exit station;
when the pallet-piler is stacked full of pallets according to the capacity of pallet-piler by successive retrieving operations, the pallets are moved and stored to a storage space, and inversely, the stacked pallets are fed to the pallet-piler when it runs out of pallets.

18. A container storing system, **characterized by**:
at least one vertical storage block;
each storage block including a plurality of storage layers;
each storage layer comprising upper and lower container storage spaces, and a horizontal intermediate transport passage positioned between the upper and the lower container storage spaces, the upper and the lower container storage spaces are disposed above and under the transport passage respectively;
said horizontal transport passage is provided with a carrier which comprises a lifting means and can move along the horizontal transport passage across the lower storage spaces; and
at least one vertical passage for a container crane, extending through the storage layers, the crane can move up and down in the vertical passage and exchange containers with a transferring trolley arranged in a space beside the vertical passage, wherein the transferring trolley translates horizontally to a position below the crane and said crane hoists the containers to the transferring trolley.

19. The container storing system according to claim 18, wherein the transferring trolleys of the upper and the lower container storage spaces are respectively provided with corresponding bases and holders.

20. A container terminal, comprising:
a terminal handling area, consisted of container berths and at least one container dockside crane, and a container storage area, ***characterized in that**:* several stowage overhead-tracks parallel to the gantry rails of the dockside crane(s) are arranged under the dockside crane(s); each overhead-track is provided with a plurality of terminal stowage trolleys; the container storage area and the terminal handling area are connected by a plurality of conveying tracks, through which containers are conveyed in two directions; and the conveying tracks extend beneath and perpendicular to the overhead-tracks.

21. The container terminal according to claim 20, wherein
each conveying track is provided with a conveying carrier capable of moving and positioning automatically along the conveying track;
said conveying carrier comprises a running mechanism and a lifting means, of which three/three pairs of the holding arms are capable of lifting a container placed on the lifting means transversely, wherein the holding arms at both ends are situated near inside of a 40 feet container, and the middle holding arms hold a container of 40-50 feet or two side-to-side 20 feet containers from the middle thereof.

22. The container terminal according to claim 20, wherein
the terminal transferring trolley comprises a running mechanism and a holder and can move and position automatically along the stowage track;
the holder of the terminal transferring trolley can translate or rotate to hold a container from below or to let the container pass through the trolley; the holders at both ends being capable of translating, and the middle holders being capable of rotating and joining/docking.

23. The container terminal according to claim 20, wherein the containers are conveyed by a conveying trolley on the conveying track in two directions;
a track for the movement of a lifting trolley is provided under the intersection of the conveying track and the stowage overhead-track;
the lifting arms of the lifting trolley being capable of passing through notches provided in the bottom of the conveying trolley to lift and transfer the container placed on the conveying trolley to the terminal stowage trolley on the stowage track, accomplishing the exchange/transfer of containers between the conveying trolley and the terminal stowage trolley.

24. A port container handling method, utilizing container dockside cranes in operations, wherein during the loading operation, the method comprises the steps of:
a container is conveyed along a conveying track by a conveying carrier/trolley from a container storage area to a position under a stowage overhead-track;
an empty terminal stowage trolley on the overhead-track moves near locates and aligns with the conveying carrier/transport trolley below;
then the container is transferred to the terminal stowage trolley;
the terminal stowage trolley carries the container, moves along the overhead-track to a position under a dockside crane for loading containers to a ship and positions;
the dockside crane hoists the container from the terminal stowage trolley to the ship;
wherein during the unloading operation, the method comprises the reverse steps of:
the crane trolley of the dockside crane hoists the container from the ship to the terminal stowage trolley waiting under the dockside crane;
then the terminal stowage trolley carries the container, moves along the overhead-track to a position above a conveying carrier/ trolley waiting on a conveying track, and aligns with the conveying carrier/trolley to transfer the container to the conveying carrier/trolley; and
the container is conveyed along the conveying track by the conveying carrier/ trolley to the storage area.

25. The port container handling method according to claim 24, wherein the transfer of a container between a conveying carrier/ trolley and a terminal stowage trolley comprises the steps of:
transferring from a terminal stowage trolley to a conveying carrier/ trolley:
the terminal stowage trolley carrying the container is located above the empty conveying carrier/trolley on a conveying track below;
the holding arms of the lifting means of the conveying carrier/the lifting trolley rises up to hold the container from below;
the holders of the terminal stowage trolley retract into the trolley through translational or rotational movement; and
then the holding arms hold the container to descend, and then transfer the container to the conveying carrier/trolley;
transferring from a conveying carrier/transport trolley to a terminal stowage trolley:
the conveying carrier/trolley carrying the container, moves along a conveying track, and is positioned under an empty terminal stowage trolley on an overhead-track;
the holders of the terminal stowage trolley retract into the trolley by translational or rotational movement;
then the holding arms of the lifting means of the conveying carrier/the lifting trolley hold the container up to a position higher than that of the holders of the terminal stowage trolley;
the holders of the terminal stowage trolley extend out by translational or rotational movement; and
then the holding arms hold the container to descend, and place the container on the holders of the terminal stowage trolley;
the arms keeping on descending to leave the container to the terminal stowage trolley.

26. A warehousing/parking management system, destined for controlling and managing the warehousing/parking system according to one of claims 3 to 12, ***characterized in that**,* the warehousing/parking management comprising an information management subsystem, a logistics management subsystem, an automatic storing/retrieving control subsystem and a status monitoring subsystem, wherein said information management subsystem is in charge of collecting, receiving and exchanging data, and transferring data through networks; said logistics management subsystem is in charge of distributing, scheduling, calculating fees, managing bills and predicting trends according to the client's requirement and the information from the information management subsystem; said automatic storing/retrieving control subsystem is in charge of controlling the operating units to execute storing/retrieving operations; said status monitoring subsystem is in charge of local and remote supervision, local and remote trouble shooting and diagnostics, and safety supervision.
